# EUROPEAN PATENT APPLICATION

(11) **EP 4 661 385 A1**
(43) Date of publication of application: **10.12.2025**
(21) Application number: 25163180.0
(22) Date of filing: 12.03.2025
(51) Int. Cl.: H04N 1/00, G06F 3/12

(54) **IMAGE FORMING SYSTEM, IMAGE FORMING APPARATUS, AND IMAGE FORMING METHOD**

(30) Priority: 06.06.2024 JP 2024092548
(71) Applicant: Toshiba TEC Kabushiki Kaisha, Tokyo 141-8562 (JP)
(72) Inventor: KAMADA, Jin, Shinagawa-ku, Tokyo, 141-8562 (JP)
(74) Representative: Hoffmann Eitle

(57) **Abstract**

According to one embodiment, an image forming system includes an image forming unit that forms an image according to a printing job based on installed functions, wherein the printing job includes printing options that require installation options to be installed in the image former to execute the printing job, and a processor. The processor is configured to specify the installation option required to execute the printing option included in the printing job after the image is formed by the image forming unit, collect expected value information indicating a user's expected value related to the specified installation option, generate report information on the installation option based on the collected user's expected value information, and output notification of the generated report information.

## Description

### CROSS-REFERENCE TO RELATED APPLICATION

This application is based upon and claims the benefit of priority from Japanese Patent Application No. 2024-092548, filed on June 6, 2024, the entire contents of which are incorporated herein by reference.

### FIELD

Embodiments described herein relate generally to an image forming system, an image forming apparatus, and a method of using an image forming system including an image forming apparatus.

### BACKGROUND

In recent years, cloud printing services that utilize cloud computing (hereafter simply a "cloud") have been provided. In this cloud printing service, a user can upload a printing job to a printing server in a cloud and then download the printing job to any image forming apparatus to execute image formation. A printing job includes data to be printed such as character data and image data that are the source of an image to be formed on paper, and information on printing options such as a stapling function and a punching function.

However, an image forming apparatus selected by a user may not have an installation option required to execute a printing option, for example, a finisher that includes a stapler for realizing a stapling function. In this manner, an image forming apparatus that does not have an installation option required to execute a printing option included in a printing job performs image formation by using only functions that can be handled by its own machine. That is, even when any image forming apparatus does not necessarily match printing conditions expected by a user, the image forming apparatus performs an image forming operation (on the assumption that the user will finish the operation manually later). For this reason, an administrator of the image forming apparatus will miss an opportunity to consider what installation options are to be installed in the image forming apparatus to improve productivity.

### SUMMARY OF THE INVENTION

One of the objects of the present invention is to improve prior art techniques and overcome at least some of the prior art problems as for instance above illustrated.

According to a first aspect of the present invention, it is provided an image forming system comprising an image forming unit configured to form an image according to a printing job based on installed functions, wherein the printing job includes printing options that require installation options to be installed in the image former to execute the printing job; and a processor configured to specify the installation option required to execute the printing option included in the printing job after the image is formed by the image forming unit, collect expected value information indicating a user's expected value related to the specified installation option, generate report information on the installation option based on the collected user's expected value information, and output notification of the generated report information.

Optionally, in the image forming system according to the first aspect of the invention, when the processor collects the expected value information, the processor is configured to generate an inquiry screen including an inquiry item related to the installation option, present the inquiry screen to the user, and acquire a an answer from the user to the inquiry item, the answer being the expected value information.

Optionally, in the image forming system according to the first aspect of the invention, the inquiry item includes a requirement for installation of the installation option.

Optionally, in the image forming system according to the first aspect of the invention, the inquiry item includes a future user action with respect to an image formation result using the installed functions of the image forming unit.

Optionally, the image forming system according to the first aspect of the invention further comprises an image forming apparatus that comprises: the image forming unit, a communication interface for communicating with an external device via a network, a user interface for presenting information to the user and receiving an instruction from the user, and the processor, and a server device that includes a communication interface for communicating with an external device via the network and a server device processor.

Optionally, in the image forming system according to the first aspect of the invention, the processor of the image forming apparatus: displays the inquiry screen through the user interface, receives the user's answer to the inquiry item through the user interface, generates the report information based on the acquired answer, and outputs notification of the generated report information through the communication interface.

Optionally, in the image forming system according to the first aspect of the invention, the processor of the image forming apparatus is configured to transmit log information related to the formed image to the server device through the communication interface after the image formation performed by the image forming unit, and the processor of the server device is configured to: specify the installation option required to execute the printing option included in the printing job, which is a source of the image formation in the image forming apparatus, based on the log information transmitted from the image forming apparatus and received through the communication interface, generate the inquiry screen based on the specified installation option, and transmit the generated inquiry screen to the image forming apparatus.

Optionally, in the image forming system according to the first aspect of the invention, the processor of the image forming apparatus is further configured to present the inquiry screen transmitted from the server device and received through the communication interface to the user via the user interface, receive the user's answer to the inquiry item via the user interface, and transmit the acquired user's answer to the server device through the communication interface, and the processor of the server device is further configured to generate the expected value information based on the generated inquiry screen and the answer transmitted from the image forming apparatus and received through the communication interface, generate the report information based on the generated expected value information, and output notification of the generated report information through the communication interface.

Optionally, in the image forming system according to the first aspect of the invention, the processor generates the report information based on the collected expected value information each time a certain period of time elapses, and outputs notification of the report information.

Optionally, in the image forming system according to the first aspect of the invention, the processor generates the report information based on the collected expected value information each time the expected value information is collected.

According to a second aspect of the invention, it is provided an image forming apparatus comprising a communication interface configured to communicate with a server device that temporarily stores a printing job received from a user terminal via a network; a user interface that presents information to a user and receives an instruction from the user; an image forming unit configured to receive the printing job from the server device through the communication interface, and form an image in response to the user's instruction to form the image according to the printing job stored in the server device with respect to the user interface, wherein the image forming unit forms the image according to the printing job based on installed functions, wherein the printing job includes printing options that require installation options to be installed in the image forming unit to execute the printing job; and a processor configured to specify the installation option required to execute the printing option included in the printing job after the image is formed by the image forming unit, collect expected value information indicating the user's expected value related to the specified installation option using the user interface, and output the collected user's expected value information.

Optionally, in the image forming apparatus according to the second aspect of the invention, when the processor collects the expected value information, the processor is further configured to generate an inquiry screen including an inquiry item related to the installation option, present the generated inquiry screen to the user through the user interface, and acquire an answer from the user to the inquiry item, the answer being the expected value information, from the user interface.

Optionally, in the image forming apparatus according to the second aspect of the invention, the inquiry item includes requirement for installation of the installation option in the image forming apparatus, and wherein the inquiry item includes a future user action with respect to an image formation result using only the functions that are able to be handled by its own machine.

Optionally, in the image forming apparatus according to the second aspect of the invention, when the processor outputs the expected value information, the processor transmits the collected user's expected value information to the server device through the communication interface.

Optionally, in the image forming apparatus according to the second aspect of the invention, when the processor outputs the expected value information, the processor is further configured to generate report information on the installation option in the image forming apparatus based on the collected user's expected value information, and output a notification of the generated report information through the communication interface.

Optionally, in the image forming apparatus according to the second aspect of the invention, the processor is configured to generate the report information based on the collected expected value information each time a period of time elapses, and provide a notification of the report information.

Optionally, in the image forming apparatus according to the second aspect of the invention, the processor is configure to generate the report information based on the collected expected value information each time the processor collects the expected value information, and provide a notification of the report information.

According to a third aspect of the invention, it is provided a method of forming an image that is executed by a processor of an image forming apparatus that includes a communication interface configured to communicate with a server device that temporarily stores a printing job received from a user terminal via a network, a user interface that presents information to a user and receives an instruction from the user, an image forming unit that receives the printing job from the server device through the communication interface and forms an image in response to the user's instruction to form the image according to the printing job stored in the server device with respect to the user interface, the image forming unit forms the image according to the printing job based on installed functions, wherein the printing job includes printing options that require installation options to be installed in the image forming unit to execute the printing job, the method comprising specifying the installation option required to execute the printing option included in the printing job after the image is formed by the image forming unit; collecting expected value information indicating the user's expected value related to the specified installation option using the user interface; and outputting the collected user's expected value information.

Optionally, the method according to the third aspect of the invention further comprises generating an inquiry screen including an inquiry item related to the installation option based on the specified installation option; transmitting the generated inquiry screen to the image forming apparatus by the communication interface; generating expected value information indicating a user's expected value related to the installation option in the image forming apparatus, based on the generated inquiry screen and a received user's answer to the inquiry item, the user's answer being collected via the image forming apparatus and transmitted from the image forming apparatus via the communication interface; generating report information on the installation option in the image forming apparatus based on the generated expected value information; and providing a notification of the generated report information through the communication interface.

Optionally, in the method according to the third aspect of the invention, the report information based on the collected expected value information is generated in response to a period of time elapsing.

### DESCRIPTION OF THE DRAWINGS

FIG. 1 is a schematic diagram of an image forming system according to a first embodiment;
FIG. 2 is a block diagram showing an example of a circuit configuration of a server device;
FIG. 3 is a block diagram showing an example of a circuit configuration of an image forming apparatus;
FIG. 4 is a sequence diagram showing operations of the image forming system;
FIG. 5 is a diagram showing a first part of a series of flowcharts showing an example of feedback processing in the image forming apparatus, which is related to the creation of report information on non-installation options to be notified to an administrator;
FIG. 6 is a diagram showing a second part of the series of flowcharts showing the example of the feedback processing in the image forming apparatus;
FIG. 7 is a diagram showing a third part of the series of flowcharts showing the example of the feedback processing in the image forming apparatus;
FIG. 8 is a diagram showing an example of display of a feedback page in the image forming apparatus;
FIG. 9 is a diagram showing an example of display of a request input page in the image forming apparatus;
FIG. 10 is a diagram showing an example of display of a confirmation pop-up in the image forming apparatus;
FIG. 11 is a schematic diagram showing an example of request feedback data generated by the image forming apparatus;
FIG. 12 is a flowchart showing an example of feedback processing in the server device, which is related to the creation of report information on non-installation options to be notified to the administrator;
FIG. 13 is a flowchart showing an example of feedback processing in the server device according to a modification example;
FIG. 14 is a schematic diagram showing an example of report information generated by the server device;
FIG. 15 is a block diagram showing an example of a circuit configuration of an image forming apparatus according to a second embodiment;
FIG. 16 is a sequence diagram showing operations of an image forming system;
FIG. 17 is a flowchart showing an example of report processing in the image forming apparatus;
FIG. 18 is a block diagram showing an example of a circuit configuration of an image forming apparatus according to a third embodiment;
FIG. 19 is a block diagram showing an example of a circuit configuration of a server device;
FIG. 20 is a sequence diagram showing operations of an image forming system;
FIG. 21 is a flowchart showing an example of feedback processing after image formation in the image forming apparatus;
FIG. 22 is a diagram showing a first part of a series of flowcharts showing an example of feedback processing in the server device;
FIG. 23 is a diagram showing a second part of the series of flowcharts showing the example of the feedback processing in the server device; and
FIG. 24 is a diagram showing a third part of the series of flowcharts showing the example of the feedback processing in the server device.

### DETAILED DESCRIPTION

A problem to be solved by the embodiments is to provide an image forming system, an image forming apparatus, and an image forming method which are capable of giving an administrator of the image forming apparatus an opportunity to consider installation options to be installed in the image forming apparatus.

In general, according to one embodiment, an image forming system includes an image forming unit (e.g., an image former, etc.) that performs image formation according to a printing job using only functions that are able to be handled by its own machine when an installation option required to execute a printing option included in the printing job is not provided, and a processor. The processor specifies the installation option required to execute the printing option included in the printing job after the image formation performed by the image forming unit, collects expected value information indicating a user's expected value related to the specified installation option, generates report information on the installation option based on the collected user's expected value information, and notifies an administrator of the generated report information.

### [First embodiment]

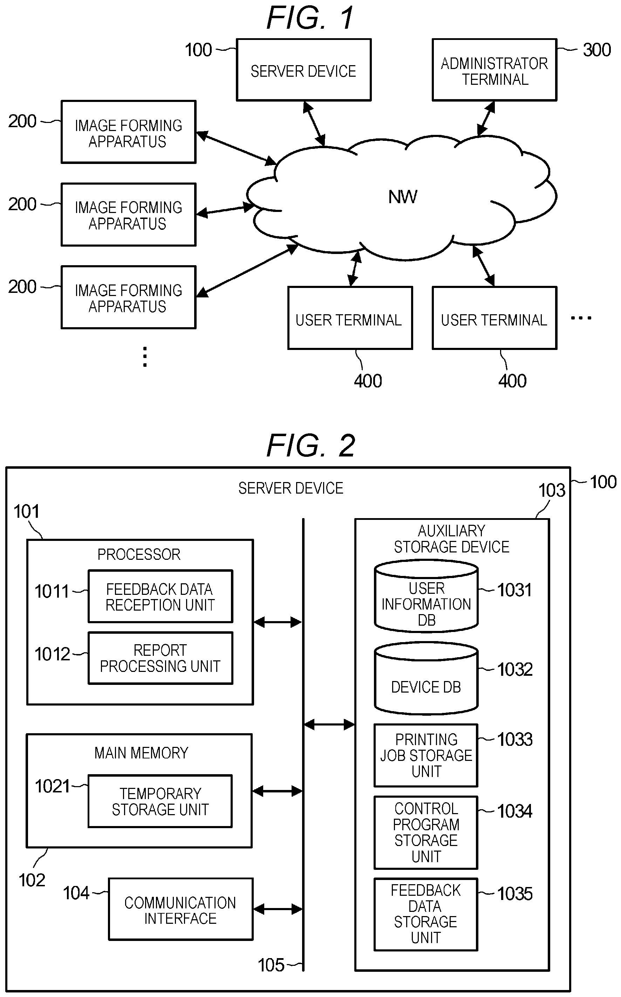

FIG. 1 is a schematic diagram of an image forming system according to a first embodiment. The image forming system is a system for providing a cloud printing service, and includes a server device 100 which is a server device according to the first embodiment, a plurality of image forming apparatuses 200 which are each an image forming apparatus according to the first embodiment, and an administrator terminal 300. The image forming system can also include a plurality of user terminals 400 to be used by users who receive services. The server device 100 can be communicatively connected to the image forming apparatuses 200, the administrator terminal 300, and the user terminals 400 via a network NW. The connections between the server device 100, the image forming apparatuses 200, the administrator terminal 300, the user terminals 400, and the network NW may be performed in a wired or wireless manner.

The server device 100 is a printing server that receives a printing job from the user terminal 400 and transmits the received printing job to the image forming apparatus 200. The server device 100 may be, for example, a server device operated by a printing service company that deploys printing service stations at various locations. In this case, the network NW may be a public network such as the Internet. The server device 100 may also be an in-house server device disposed within a company. In this case, the network NW may be an in-house local area network (LAN).

The image forming apparatus 200 is disposed in a work place such as a printing service station or within a company. The image forming apparatus 200 may be an apparatus that performs printing by electrophotography. Although not limited thereto, hereinafter, the image forming apparatus 200 is assumed to be a multi-function peripheral (hereinafter abbreviated as MFP) equipped with at least a scanning function and a printing function.

The administrator terminal 300 is a terminal used by an administrator who administers the plurality of image forming apparatuses 200, and is an information processing apparatus such as a personal computer (PC), a smartphone, a tablet terminal, or the like. The administrator terminal 300 may be located in a work place or outside the work place. There may be a plurality of administrators, not just one. Although only one administrator terminal 300 is shown in FIG. 1, there may be a plurality of administrator terminals.

The user terminal 400 is an information processing apparatus such as a PC, a smartphone, a tablet terminal, a digital camera, or the like that gives an instruction for printing in any of the image forming apparatuses 200. The user terminal 400 may be located in a work place or outside the work place.

FIG. 2 is a block diagram showing an example of a circuit configuration of the server device 100 according to the first embodiment. The server device 100 includes, as an example, a processor 101, a main memory 102, an auxiliary storage device 103, and a communication interface 104. These components are connected to each other via a bus line 105 such as an address bus or a data bus.

The processor 101 corresponds to a central part of a computer that performs processing such as calculation and control required for the operation of the server device 100. The processor 101 may be equipped with an internal memory and various interfaces. The processor 101 controls each unit to realize various functions of the server device 100 based on programs such as system software, application programs, or firmware stored in the main memory 102, the auxiliary storage device 103, or the internal memory. The processor 101 is, for example, a central processing unit (CPU), but is not limited thereto. The processor 101 may be a multi-core/multi-thread processor, and can execute a plurality of processes in parallel. In addition, the processor 101 may be a micro processing unit (MPU). Furthermore, some of the various functions that are realized by the processor 101 executing a program may be realized in various other forms, including integrated circuits such as an application specific integrated circuit (ASIC), a graphics processing unit (GPU), a field-programmable gate array (FPGA), a digital signal processor (DSP), a system on a chip (SoC), and a programmable logic device (PLD). In addition, the processor 101 may be a combination of two or more of these.

The processor 101 loads programs, which are stored in advance in the main memory 102, the auxiliary storage device 103, or the internal memory, into the main memory 102. The programs include a control program that causes the processor 101 of the server device 100 to realize each unit to be described later according to this embodiment. The processor 101 executes various operations by executing the programs loaded into the main memory 102.

The main memory 102 corresponds to a main memory portion of the server device 100. The main memory 102 includes a non-volatile memory area and a volatile memory area. The non-volatile memory area of the main memory 102 stores an operating system (OS) or programs. The main memory 102 uses the volatile memory area as a work area or a buffer area where data is appropriately rewritten by the processor 101. For example, the main memory 102 includes a read only memory (ROM) as a non-volatile memory area. For example, the main memory 102 includes a random access memory (RAM) as a volatile memory area. The RAM can include a temporary storage unit 1021 (e.g., a storage, etc.) that stores data required to execute the control program and the application program stored in the auxiliary storage device 103, execution results of those programs, and the like.

The auxiliary storage device 103 corresponds to an auxiliary storage portion of the server device 100. For example, the auxiliary storage device 103 can be an electric erasable programmable read-only memory (EEPROM (registered trademark)), a hard disc drive (HDD), a solid state drive (SSD), or the like. The auxiliary storage device 103 stores the above-described programs, data used by the processor 101 when performing various processes, and data generated through the processes in the processor 101.

One of the programs stored in the auxiliary storage device 103 is a control program, which will be described later. The transfer of a computer device such as the server device 100 is generally performed with a program such as the control program stored in the main memory 102 or the auxiliary storage device 103. However, this is not limiting, and a control program and the like transferred separately from the computer device may be written into a writable storage device included in the computer device in response to an operation of a user or the like. The transfer of the control program and the like can be performed by recording the program and the like on a removable computer-readable storage medium or by communication via the network NW. The form of the computer-readable storage medium does not matter as long as it can store a program and can be read by an apparatus, such as a CD-ROM or a memory card. In addition, a function obtained by installing or downloading a program may be realized in cooperation with an OS and the like inside the apparatus.

The communication interface 104 includes various interfaces that connect the server device 100 to external devices on the network NW, such as the image forming apparatus 200, the administrator terminal 300, and the user terminal 400, so that the server device 100 can communicate with them in accordance with a predetermined communication protocol.

A hardware configuration of the server device 100 is not limited to the above-described configuration. The server device 100 allows the omission or modification of the above-described components and the addition of new components as appropriate.

Here, each unit configured in the auxiliary storage device 103 of the server device 100 will be described. The auxiliary storage device 103 stores, for example, a user information database 1031 and a device database 1032, and also includes a printing job storage unit 1033, a control program storage unit 1034, and a feedback data storage unit 1035. In FIG. 2, a "database" is abbreviated to "DB".

The user information database 1031 is a database for administering each user who uses the image forming system, and is a collection of data records associated with registered users. For this reason, the user information database 1031 includes a user information record for each user. Each user information record includes, for example, a field in which a user ID, which is identification information for distinguishing the user terminal 400 or a user, and the like are set as user information, a field in which a network address, such as an IP address of the user terminal 400 used by the user, is set, and the like. The user information record may also include a field in which authorization information used at the time of log-in, such as a password, is set, a field in which billing information for using a cloud printing service is set, and the like. Furthermore, the user information record can include a field in which an administrator flag is set, and a user for whom this administrator flag is set can be registered as an administrator. That is, any user can be set as an administrator. Naturally, an administrator information storage separate from the user information database 1031 may be provided in the auxiliary storage device 103 to store administrator information including the network address of the administrator terminal 300, an administrator ID which is identification information for the administrator terminal 300 or the administrator, and authorization information such as a password, and the like. Information registered in the user information database 1031 can be set from the administrator terminal 300 via the network NW or from the terminal of the administrator of the server device 100 which is not shown in the drawing.

The device database 1032 is a database for administering the image forming apparatuses 200, and is a collection of data records associated with the registered image forming apparatuses 200. For this reason, the device database 1032 includes device information records for each image forming apparatus 200. The device information record includes, for example, a field in which a device ID, which is identification information for distinguishing the image forming apparatus 200, and the like are set, a field in which a network address, such as an IP address of the image forming apparatus 200, is set, and the like. The device ID may be a model number, a device number, or the like of the image forming apparatus 200, or may be the installation location or the like of the image forming apparatus 200. When the image forming apparatus 200 is installed in a printing service station, the installation location may be the address of the service station. In addition, when the image forming apparatus 200 is installed in a company, the installation location may be a physical location such as a building or a floor, or can also be a logical location such as a department. The device information record further includes a field in which information on whether each of installation options that can be installed in the image forming apparatus 200 has been installed is set. Similarly to the information registered in the user information database 1031, the information registered in the device database 1032 can be set from the administrator terminal 300 via the network NW or from the terminal of the administrator of the server device 100 which is not shown in the drawing. In addition, the server device 100 may communicate with the image forming apparatus 200 to acquire the information registered in the device database 1032 from each image forming apparatus 200.

The printing job storage unit 1033 is a storage that temporarily stores a printing job transmitted from the user terminal 400. The printing job includes data to be printed such as character data and image data that are the source of an image to be formed on paper. The data to be printed may be data for forming an image on one sheet of paper, or data for forming an image on a plurality of sheets of paper. Further, the printing job may include additional information such as identification information such as a file name of target data for identifying the printing job, a user ID for specifying the user terminal 400 or the user which is a transmission source, information indicating color printing or monochrome printing, the number of copies to be printed (number of page sets), the number of printing sheets per copy (number of pages), and printing options such as a stapling function or a punching function.

The control program storage unit 1034 stores a control program that cause the processor 101 to realize each unit (e.g., device, group of devices, etc.) to be described below according to this embodiment.

The feedback data storage unit 1035 stores feedback data transmitted from the image forming apparatus 200 via the network NW. The feedback data is information indicating a result of an inquiry made to a user regarding the necessity of an installation option, which is required to execute a printing option included in a printing job, when the image forming apparatus 200 does not have the installation option and performs image formation in accordance with the printing job using only functions that can be handled by its own machine. A method of generating this feedback data in the image forming apparatus 200 and details of the feedback data will be described later.

Next, each unit installed in the processor 101 of the server device 100 by executing the control program will be described. The processor 101 is equipped with, for example, a feedback data reception unit 1011 and a report processing unit 1012. Although not particularly shown in the drawing, the processor 101 is also equipped with processing units (e.g., processors, etc.) for realizing normal operations of the server device 100 as a printing server such as a database administration unit (e.g., a database administration unit, etc.) for registering information in the user information database 1031 and the device database 1032, a printing job transmission/reception unit for transmitting and receiving printing jobs, and the like, in addition to those units. The units installed in the processor 101 can also be referred to as functions (e.g., processor functions, processor instructions, etc.). The units installed in the processor 101 can also be said to be installed in a control unit (e.g., a controller, a control system, etc.) including the processor 101 and the main memory 102.

When the printing job transmission/reception unit (e.g., transmitter/receiver, etc.) for realizing the normal operations of the server device 100 receives a printing job transmitted from the user terminal 400 through the communication interface 104, the printing job transmission/reception unit stores the received printing job in the printing job storage unit 1033. In addition, when the printing job transmission/reception unit receives a printing execution instruction from the image forming apparatus 200 through the communication interface 104, the printing job transmission/reception unit transmits a corresponding printing job from among the printing jobs stored in the printing job storage unit 1033 to the image forming apparatus 200 which is the source of transmission of the printing execution instruction through the communication interface 104. The printing execution instruction is transmitted from the image forming apparatus 200 in response to a predetermined operation such as a user of the user terminal 400, which is the source of transmission of a printing job, moving to the installation location of any image forming apparatus 200 and inputting his or her user ID or designating the printing job to be printed. The printing execution instruction may include, for example, the device ID of the image forming apparatus 200 which is the source of transmission and identification information of the printing job. The printing job transmission/reception unit reads the printing job corresponding to the received printing execution instruction from the printing job storage unit 1033, and transmits the read printing job to the image forming apparatus 200 which is the source of transmission of the printing execution instruction through the communication interface 104.

The feedback data reception unit 1011 (e.g., feedback data receiver, etc.), which is installed in the processor 101 by executing the control program, receives the feedback data transmitted from the image forming apparatus 200 through the communication interface 104. The feedback data reception unit 1011 stores the received feedback data in the feedback data storage unit 1035.

Similarly, the report processing unit 1012 (e.g., report processor, etc.), which is installed in the processor 101 by executing the control program, creates report information on non-installation options to be notified to the administrator, based on the feedback data stored in the feedback data storage unit 1035. The feedback data is computer-readable information indicating the result of an inquiry made to the user on the necessity of installation options, and the like, and the report information is information that is converted into a form that can be recognized by humans. The report processing unit 1012 transmits the generated report information to the administrator terminal 300 through the communication interface 104.

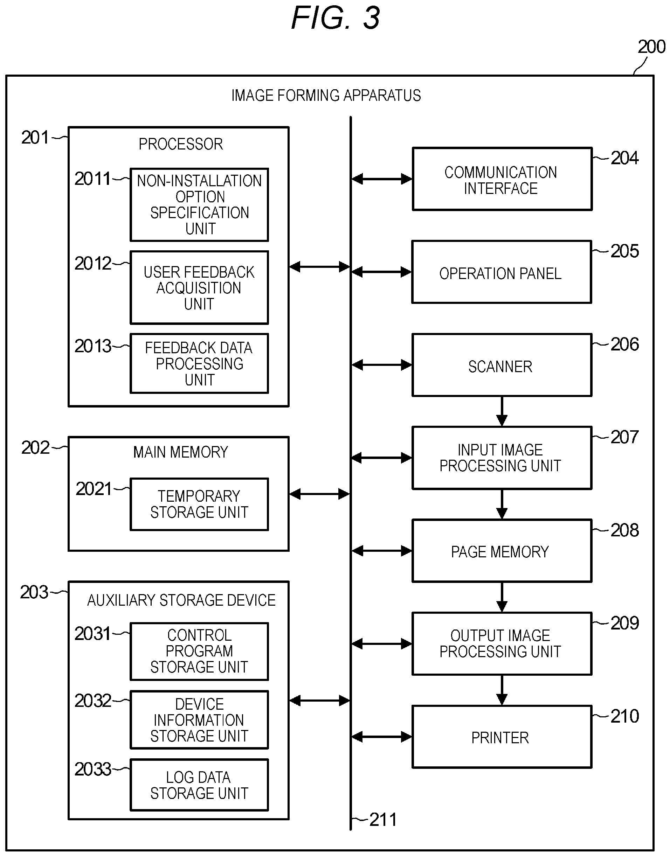

FIG. 3 is a block diagram showing an example of a circuit configuration of the image forming apparatus 200 according to the first embodiment. As an example, the image forming apparatus 200 includes a processor 201, a main memory 202, an auxiliary storage device 203, a communication interface 204, an operation panel 205, a scanner 206, an input image processing unit 207 (e.g., an image processor, etc.), a page memory 208, an output image processing unit 209 (e.g., an output image processor, etc.), and a printer 210. These units (e.g., processors, etc.) are connected to each other via a bus line 211 such as an address bus or a data bus. In addition to the configuration shown in FIG. 3, the image forming apparatus 200 may include other configurations as necessary, or a specific configuration may be excluded from the configuration shown in FIG. 3.

The processor 201 corresponds to a central part of a computer that performs processing such as calculation and control required for the operation of the image forming apparatus 200. The processor 201 may be equipped with an internal memory and various interfaces. The processor 201 controls each unit to realize various functions of the image forming apparatus 200 based on programs such as system software, application programs, or firmware stored in the main memory 202, the auxiliary storage device 203, or the internal memory. The processor 201 is, for example, a CPU, but is not limited thereto. The processor 201 may be a multi-core/multi-thread processor, and can execute a plurality of processes in parallel. In addition, the processor 201 may be an MPU. Furthermore, some of the various functions that are realized by the processor 201 executing a program may be realized by various types of hardware circuits including integrated circuits such as an ASIC, a GPU, an FPGA, a DSP, a SoC, and a PLD. In addition, the processor 201 may be a combination of two or more of these.

The processor 201 loads programs, which are stored in advance in the main memory 202, the auxiliary storage device 203, or the internal memory, into the main memory 202. The programs include a control program that causes the processor 201 of the image forming apparatus 200 to realize each unit (e.g., processor, etc.) to be described later according to this embodiment. The processor 201 executes various operations by executing the programs loaded into the main memory 202.

The main memory 202 corresponds to a main memory portion of the image forming apparatus 200. The main memory 202 includes a non-volatile memory area and a volatile memory area. The main memory 202 stores an OS or programs in the non-volatile memory area. The main memory 202 uses the volatile memory area as a work area or a buffer area where data is appropriately rewritten by the processor 201. For example, the main memory 202 includes a ROM as a non-volatile memory area. For example, the main memory 202 includes a RAM as a volatile memory area. The RAM can include a temporary storage unit 2021 that stores data required to execute the control program and the application program stored in the auxiliary storage device 203, execution results of those programs, and the like.

The auxiliary storage device 203 corresponds to an auxiliary storage portion of the image forming apparatus 200. For example, the auxiliary storage device 203 is an EEPROM, a HDD, an SSD, a flash memory, or the like. The auxiliary storage device 203 stores the above-described control program, data used by the processor 201 when performing various processes, and data generated through the processes in the processor 201. For example, the auxiliary storage device 203 includes a control program storage unit 2031, a device information storage unit 2032, and a log data storage unit 2033. The control program storage unit 2031, the device information storage unit 2032, and the log data storage unit 2033 will be described later.

The communication interface 204 is an interface for communicatively connecting the image forming apparatus 200 to the server device 100, which is an external apparatus on the network NW. The communication interface 204 is configured as, for example, a LAN connector. The communication interface 204 may also be an interface for wirelessly communicating with other devices in accordance with standards such as Bluetooth (registered trademark) or Wi-fi (registered trademark).

The operation panel 205 receives various instructions input by a user. The operation panel 205 transmits signals indicating the instructions input by the user to the processor 201. The operation panel 205 includes, as operation units (e.g., operation devices, etc.), a keyboard, a numeric keypad, a touch panel, and the like. The operation panel 205 also displays various information to the user. That is, the operation panel 205 displays a screen showing various information based on a signal from the processor 201. The operation panel 205 includes a monitor such as a liquid crystal display as a display (e.g., display device, etc.). In this manner, the operation panel 205 is an example of a user interface that presents information to the user and also receives instructions from the user.

The scanner 206 optically scans a document and reads an image of the document as image data. The scanner 206 reads the document as a color image. The scanner 206 is constituted by a sensor array formed in a main scanning direction. The scanner 206 moves the sensor array in a sub-scanning direction to read the entire document.

The input image processing unit 207 (e.g., input image processor, etc.) processes the image data read by the scanner 206. The input image processing unit 207 also converts data to be printed, such as character data or image data, included in a printing job transmitted from the server device 100 into image data indicating an image to be formed.

The page memory 208 stores the image data processed by the input image processing unit 207.

The output image processing unit 209 (e.g., output image processor, etc.) processes the image data stored in the page memory 208 so that the printer 210 can print the image data on paper.

The printer 210 prints the image data processed by the output image processing unit 209 on paper under the control of the processor 201. The printer 210 prints the image data on paper, for example, by electrophotography.

The control program storage unit 2031 included in the auxiliary storage device 203 stores a control program that causes the processor 201 to realize each unit according to this embodiment, which will be described later. The control program can be stored in the control program storage unit 2031 when the image forming apparatus 200 is transferred. In addition, the control program can be stored in the control program storage unit 2031 by the administrator of the image forming apparatus 200 as necessary. For example, when the image forming apparatus 200 includes a reader which is a computer-readable storage medium, the control program recorded in the computer-readable storage medium can be stored in the control program storage unit 2031 via the reader. In addition, when the image forming apparatus 200 does not include such a reader, this can be performed from the administrator terminal 300 through communication via the network NW.

The device information storage unit 2032 stores device information of the image forming apparatus 200. The device information includes, for example, a device ID, a network address, the number of printing sheets, and the like of the image forming apparatus 200. Furthermore, the device information includes information on whether each of installation options that can be installed on the image forming apparatus 200 has been installed. The network address, the information on the presence or absence of an installation option, and the like are information registered by the administrator by using, the operation panel 205 when the image forming apparatus 200 is installed, or from the server device 100 or the administrator terminal 300 via the network NW by the communication interface 204. In addition, the information on the presence or absence of an installation option can be updated each time a new installation option is installed. The number of printing sheets is updated each time the image forming apparatus 200 forms an image on a sheet of paper. The values of the fields of the device information record corresponding to the image forming apparatus 200 in the device database 1032 of the server device 100 match the values of the corresponding items of the device information stored in the device information storage unit 2032.

The log data storage unit 2033 stores log information that indicates image formation results according to a printing job.

Next, each unit installed in the processor 201 of the image forming apparatus 200 by executing the control program will be described. The processor 201 is equipped with, for example, a non-installation option specification unit 2011 (e.g., a non-installation option specifier, etc.), a user feedback acquisition unit 2012 (e.g., a user feedback acquirer, etc.), and a feedback data processing unit 2013 (e.g., a feedback data processor, etc.). Although not particularly shown in the drawing, the processor 101 is also equipped with processing units (e.g., processors, processing groups, etc.) for realizing normal operations of the image forming apparatus 200 such as a printing processing unit (e.g., a printing processor, etc.) for performing image formation processing according to a printing job, in addition to those units. The units installed in the processor 201 can also be referred to as functions (e.g., instructions, etc.). The units installed in the processor 201 can also be said to be installed in a control unit (e.g., a controller, etc.) including the processor 201 and the main memory 202.

When the printing processing unit for realizing the normal operations of the image forming apparatus 200 receives a user input by operating the operation panel 205, and transmits a printing execution instruction for the printing job designated by the user to the server device 100 through the communication interface 204. The printing processing unit receives the printing job returned from the server device 100 through the communication interface 204, and stores the received printing job in the temporary storage unit 2021. The printing processing unit inputs printing target data included in the printing job to the input image processing unit 207. The printing processing unit controls the printer 210 based on additional information included in the printing job to form an image of image data processed by the output image processing unit 209, that is, to print the image data on paper. Then, the printing processing unit stores log information showing image formation results in the log data storage unit 2033.

For example, in the additional information included in the printing job, stapling for stapling an upper left part may be designated as a printing option. The printing processing unit confirms whether a finisher including a stapler, which is an installation option required to execute this printing option, is installed in the image forming apparatus 200, based on device information stored in the device information storage 2032. When such a finisher is installed, the printing processing unit performs processing for printing image data for which a printing position is designated to secure a margin for stapling, and stapling a plurality of sheets of paper printed by the finisher. When the finisher is not installed, the printing processing unit omits the designation of stapling and prints the image data in the center of paper. In this manner, when the image forming apparatus 200 does not have an installation option required to execute a printing option included in the printing job, the image forming apparatus 200 performs image formation according to the printing job using only functions that can be handled by its own machine. The printing processing unit can generate log information that reflects this image result, that is, log information that indicates that the printing job includes the designation of stapling, whether printing has been performed in accordance with the designation, and the like.

The non-installation option specification unit 2011 (e.g., the non-installation option specifier, etc.) installed in the processor 201 by executing the control program specifies a non-installation option which is an installation option required to execute the printing option included in the printing job but not included in the image forming apparatus 200 after the printing processing unit forms an image of the image data. A method of specifying the non-installation option by the non-installation option specification unit 2011 (e.g., non-installation option specifier, etc.) will be described in detail later.

The user feedback acquisition unit 2012 (e.g., user feedback acquirer, etc.), which is also installed in the processor 201 by executing the control program, inquires of a user about the non-installation option specified by the non-installation option specification unit 2011 by using the operation panel 205 to acquire a user feedback regarding the non-installation option. A method of acquiring the user feedback by the user feedback acquisition unit 2012 will be described in detail later.

The feedback data processing unit 2013 (e.g., feedback data processor, etc.), which is also installed in the processor 201 by executing the control program, creates feedback data based on the user feedback acquired by the user feedback acquisition unit 2012, and transmits the feedback data to the server device 100 through the communication interface 204 via the network NW. A method of creating the feedback data by the feedback data processing unit 2013 will be described in detail later.

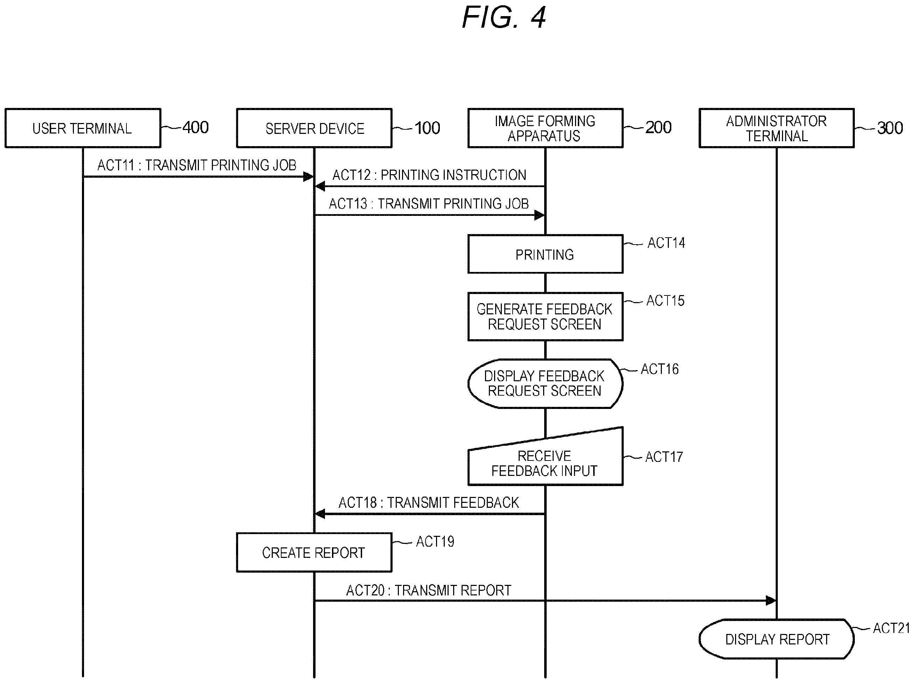

Operations of the image forming system having such a configuration will be described below. FIG. 4 is a sequence diagram showing operations of the image forming system. When a user of any of the user terminals 400 executes a printing job using a printing driver for connecting to the cloud printing service, the printing job is transmitted from the user terminal 400 to the server device 100 via the network NW (step S11). The server device 100 having received the printing job stores the printing job in the printing job storage unit 1033.

The user of the user terminal 400 which is the source of transmission of the printing job moves to any of the image forming apparatuses 200 administered by the server device 100 to perform a predetermined login operation using the operation panel 205 or the like, and then starts up an application program for connecting to the cloud printing service for realizing the printing processing unit to execute printing of the printing job. In addition, when starting up the application program for connecting to the cloud printing service, the image forming apparatus 200 also starts up a control program stored in the control program storage unit 2031 and also performs an operation for feedback.

Specifically, the image forming apparatus 200 inquires of the server device 100 about the printing job of the user, and displays a list of printable printing jobs on the operation panel 205. After the user designates a printing job to be printed via the operation panel 205, the image forming apparatus 200 transmits a printing instruction for the printing job to the server device 100 via the network NW (step S12). The server device 100, which has received the printing instruction, transmits the corresponding printing job to the image forming apparatus 200 via the network NW (step S13). The image forming apparatus 200 receives the printing job and executes printing based on the printing job (step S14).

Thereafter, the image forming apparatus 200 generates a feedback request screen for receiving a feedback from the user (step S15) and displays the generated feedback request screen on the operation panel 205 (step S16). Then, the image forming apparatus 200 receives a feedback input by the user operating the operation panel 205 (step S17) and transmits feedback data based on the received feedback to the server device 100 via the network NW (step S18).

The server device 100, which has received the feedback data transmitted from the image forming apparatus 200, creates report information based on the feedback data (step S19). Then, the server device 100 transmits the created report information to the administrator terminal 300 via the network NW (step S20).

The administrator terminal 300, which has received the report information transmitted from the server device 100, displays the received report information to present information on a non-installation option to the administrator (step S21).

Hereinafter, operations of the server device 100 and the image forming apparatus 200 related to creation of report information on non-installation options to be notified to the administrator will be described.

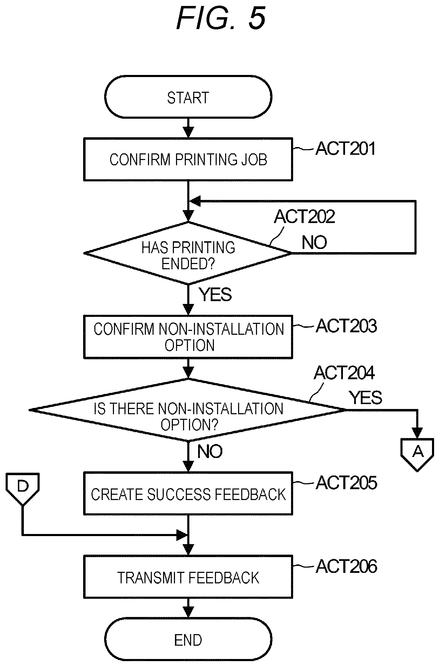

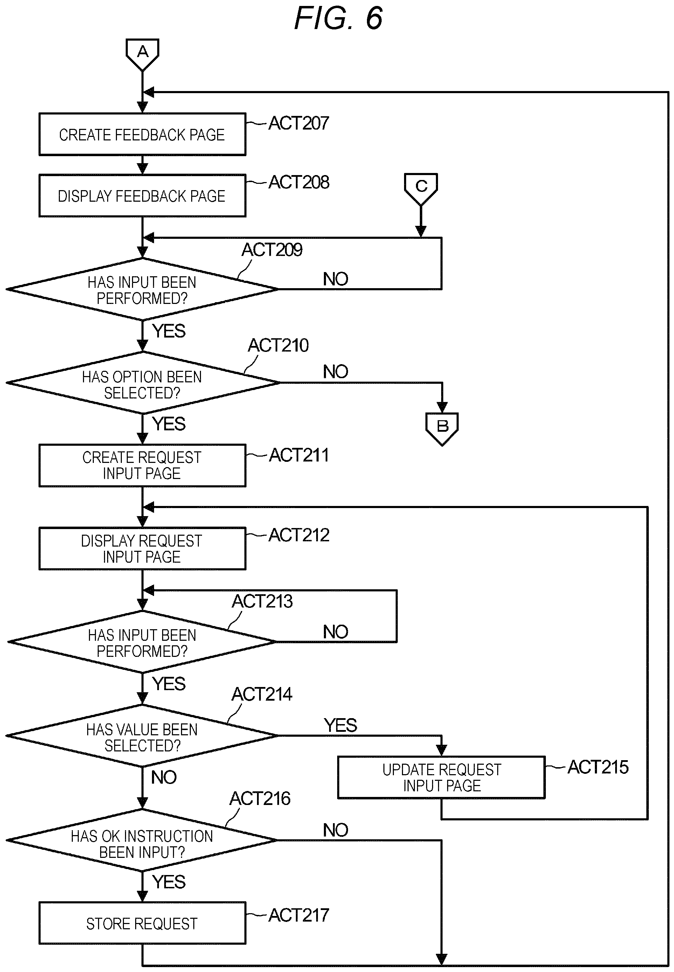

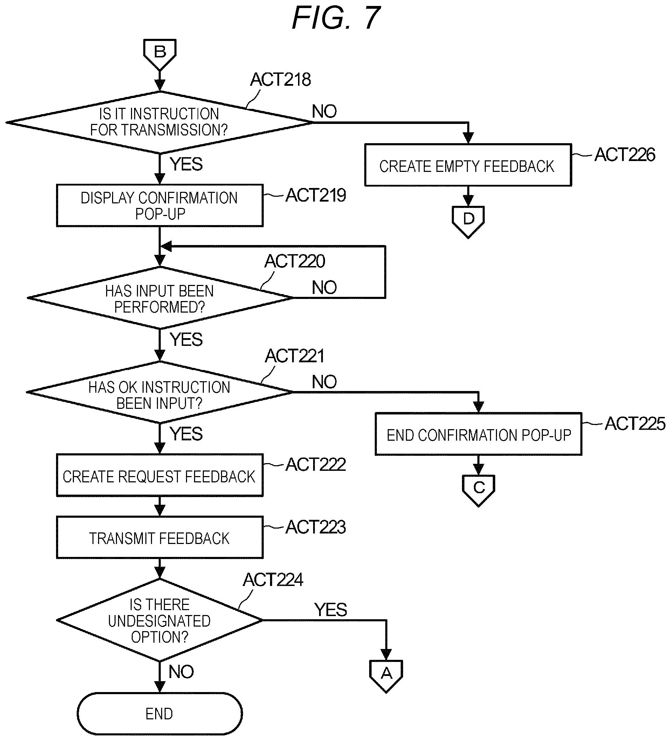

FIGS. 5 to 7 show a series of flowcharts showing an example of feedback processing in the image forming apparatus 200, which is related to the creation of report information on non-installation options to be notified to an administrator. The processor 201 of the image forming apparatus 200 can perform the feedback processing by executing the control program stored in the control program storage unit 2031. This feedback processing can be started, for example, in response to a printing job acquired from the server device 100. Unless otherwise specified, a processing operation of the processor 201 shown in the flowcharts transitions from ACTn (n is a natural number) to ACT(n+1). Furthermore, procedures shown in FIGS. 5 to 7 are merely examples. The procedures are not particularly limited as long as similar results can be obtained.

In ACT201, the processor 201 operates as the non-installation option specification unit 2011 and confirms a printing option. For example, when the printing option is the designation of stapling for stapling an upper left part of paper, the processor 201 acquires a printing option of stapling from a printing job and a printing parameter of @PJL COMMENT DSSC PRINT STAPLE=TOPLEFT. The processor 201 temporarily stores the acquired printing option and printing parameter in the temporary storage unit 2021.

In ACT202, the processor 201 determines whether printing according to the printing job has ended. When the printing has not ended, the processor 201 determines NO in ACT202 and repeats the process of ACT202. In this manner, the processor 201 waits for the printing to end. In parallel with the feedback processing shown in this flowchart, the processor 201 operates as the printing processing unit and executes an image forming operation based on the printing job. At this time, for a printing option that requires an installation option that is not installed in the image forming apparatus 200, or a printing job that includes an installation option that is installed but has a set printing parameter that cannot be designated, the processor 201 performs an image forming operation by the printer 210 without designating a printing option or by converting the printing parameter into a default value. For example, the processor 201 reads the printing parameter "TOPLEFT" as "NONE" and performs an image forming operation. In this manner, the processor 201 and the printer 210 of the image forming apparatus 200 are an example of an image forming unit that performs image formation according to a printing job using only the functions that can be handled by its own machine when the processor 201 and the printer 210 do not have an installation option required to execute a printing option included in the printing job. Then, after the printing ends, the processor 201 stores log information indicating an image formation result, that is, a printing result in the log data storage unit 2033. When the printing ends, the processor 201 determines YES in ACT202 and proceeds to the process of ACT203.

In ACT203, the processor 201 operating as the non-installation option specification unit 2011 confirms a non-installation option. Specifically, the processor 201 can confirm the non-installation option as follows.

First, the processor 201 reads the log information stored in the log data storage unit 2033. This can be said that the control program acquires the log information from the image forming apparatus 200 using an application programming interface (API). Specifically, in the case of the above example of the printing option, the processor 201 can acquire the log information in the following JSON format.

```
     {
     "total_count": 1,
     "records": [
    {
      "record_number": "9",
      <omitted>,
      "staple": "Non-Staple",
      <omitted>,
       ],
      <omitted>
          
```

The processor 201 stores the acquired log information in the temporary storage unit 2021. Then, the processor 201 designates an installation option required to execute a printing option stored in the temporary storage unit 2021 as a key, for example, "staple" for stapling, and searches for the log information stored in the temporary storage unit 2021 to acquire the corresponding printing result. For example, when a stapler is not installed, the processor 201 acquires a value "Non-Staple".

The processor 201 can also specify a non-installation option using device information stored in the device information storage unit 2032. This can be said that the control program acquires the capability of the image forming apparatus 200 (device capability) such as what installation option the image forming apparatus 200 has by using the API. Specifically, in the case of the above example of the printing option, the processor 201 acquires the capability information of the image forming apparatus 200 in the following JSON format, for example.

```
     {
      <omitted>,
      "has_finisher": true,
      "has_hole_puncher": true,
      <omitted>,
      "has_stapler": false,
      <omitted>,
      "type_of_finisher": "hangingfinisher"
```

The processor 201 stores the acquired capability information in the temporary storage unit 2021. The processor 201 then acquires whether there is an installation option required to execute the printing option stored in the temporary storage unit 2021 from the capability information stored in the temporary storage unit 2021. For example, when the printing option is stapling, the processor 201 specifies "has_stapler", which indicates a required installation option, as a key to search for capability information stored in the temporary storage unit 2021. For example, when a stapler is not installed, the processor 201 acquires a value of "false", which indicates that there is no stapler installed.

In this manner, the processor 201 can specify a non-installation option, that is, an installation option that is not installed in the image forming apparatus 200 among installation options required to execute the printing options included in the printing job. The processor 201 stores information indicating the specified non-installation option in the temporary storage unit 2021.

In ACT204, the processor 201 determines whether there is a non-installation option. Specifically, the processor 201 can determine this by confirming whether information indicating a non-installation option is stored in the temporary storage unit 2021. When there is a non-installation option, the processor 201 determines YES in ACT204 and proceeds to the process of ACT207. On the other hand, when there is no non-installation option, the processor 201 determines NO in ACT204 and proceeds to the process of ACT205.

In ACT205, the processor 201 operates as the feedback data processing unit 2013 and creates success feedback data. The processor 201 temporarily stores the created success feedback data in the temporary storage unit 2021. A specific example of the success feedback data will be described later.

In ACT206, the processor 201 transmits the feedback data temporarily stored in the temporary storage unit 2021, that is, the success feedback data in this case, to the server device 100 through the communication interface 204 via the network NW. Then, this feedback processing ends.

In ACT207, the processor 201 operates as the user feedback acquisition unit 2012 and creates a feedback page, which is one of feedback request screens, based on the information indicating the non-installation option stored in the temporary storage unit 2021.

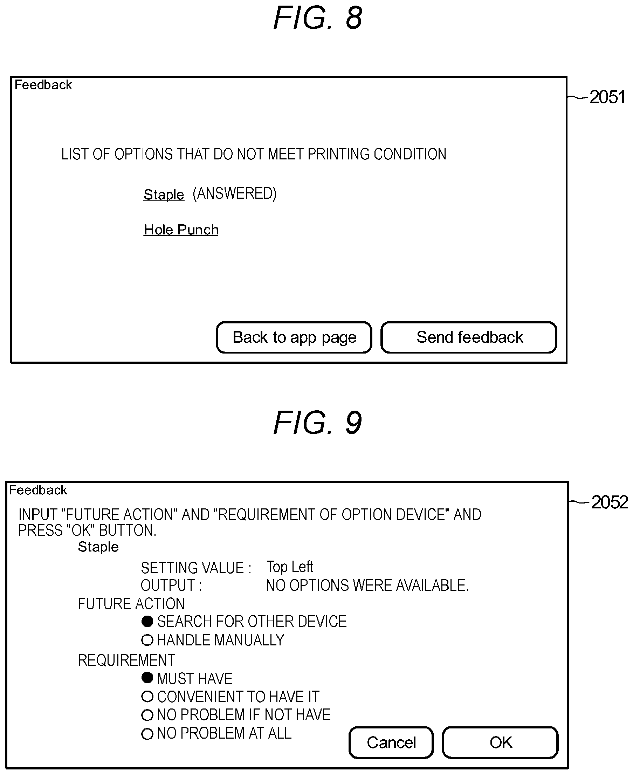

In ACT208, the processor 201 displays the created feedback page on the operation panel 205. FIG. 8 is a diagram showing an example of display of a feedback page 2051. The feedback page 2051 is a list of installation options specified as non-installation options, that is, "stapler" and "hole punch" in this example, with identification information (underlined) indicating that they are selectable. The feedback page 2051 also includes two buttons, that is, a "Back to app page" button and a "Send feedback" button. The "Back to app page" button is a button for giving an instruction to close the feedback page 2051 and return to the original display, which is a screen of an application program screen for connecting to the cloud printing service. The "Send feedback" button is a button for giving an instruction to transmit feedback data.

In ACT209, the processor 201 determines whether there has been an input to, for example, the touch panel of the operation panel 205. When there has been no input, the processor 201 determines NO in ACT209 and repeats the process of ACT209. In this manner, the processor 201 waits for the user to perform some input. When there has been an input, the processor 201 determines YES in ACT209 and proceeds to the process of ACT210.

In ACT210, the processor 201 determines whether the input is an input for selecting an installation option on the feedback page 2051. When the input is not an input for selecting an installation option, the processor 201 determines NO in ACT210 and proceeds to the process of ACT218. When the input is an input for selecting an installation option, the processor 201 determines YES in ACT210 and proceeds to the process of ACT211.

In ACT211, the processor 201 creates a request input page, which is one of the feedback request screens. Here, the request input page corresponds to the selected installation option.

In ACT212, the processor 201 displays the created request input page on the operation panel 205. FIG. 9 is a diagram showing an example of display of a request input page 2052. This example shows a case where the installation option "stapler" is selected on the feedback page 2051. The request input page 2052 presents setting values in printing options of a printing job for the selected installation option and the actual printing result, and includes an option for a type of action to be performed in the future by the user in response to the printing result, and an option for requirement for installation of the installation option in the image forming apparatus 200. The option for a type of action to be performed in the future is an example of an inquiry item for the future user action with respect to an image formation result using only functions that can be handled by its own machine. In addition, the option for requirement for installation is an example of an inquiry item for the requirement of installation of an installation option. Further, the request input page 2052 includes two buttons, that is, a "Cancel" button and an "OK" button. The "Cancel" button is a button for giving an instruction for returning to the original screen of the feedback page 2051 without storing a selection result on the request input page 2052. The "OK" button is a button for giving an instruction for confirming and storing the selection result on the request input page 2052. In this manner, the feedback request screen including the feedback page and the request input page is an example of an inquiry screen including inquiry items related to installation options.

In ACT213, the processor 201 determines whether there has been an input to, for example, the touch panel of the operation panel 205. When there has been no input, the processor 201 determines NO in ACT213 and repeats the process of ACT213. In this manner, the processor 201 waits for the user to perform some input. When there has been an input, the processor 201 determines YES in ACT213 and proceeds to the process of ACT214.

In ACT214, the processor 201 determines whether the input is an input for selecting a value in either an option for the user's future action on the request input page 2052 or an option for requirement for installation of an installation option. When the input is not an input for selecting a value, the processor 201 determines NO in ACT214 and proceeds to the process of ACT216. When the input is an input for selecting a value, the processor 201 determines YES in ACT214 and proceeds to the process of ACT215.

In ACT215, the processor 201 updates the request input page 2052 in accordance with the selected value. After this updating, the processor 201 proceeds to the process of ACT212. For example, in the example of FIG. 9, an identification display (black circle) indicates that "must have" has been selected for the requirement, but when an input is made to select "not problem if not have", the identification display of "must have" is cleared, and the request input page 2052 is updated and displayed to perform identification display of "not problem if not have".

In ACT216, the processor 201 determines whether the input is made to select the "OK" button on the request input page 2052, that is, whether an OK instruction has been input. When the OK instruction has not been input, that is, when the "Cancel" button has been selected, the processor 201 determines NO in ACT216 and proceeds to the process of ACT207. Thereby, the display on the operation panel 205 returns to the feedback page 2051. On the other hand, when the OK instruction has been input, the processor 201 determines YES in ACT216 and proceeds to the process of ACT217.

In ACT217, the processor 201 stores a request. Specifically, the processor 201 confirms the value of each option on the request input page 2052 and temporarily stores the value in the temporary storage unit 2021. Thereafter, the processor 201 proceeds to the process of ACT207. Thereby, the display on the operation panel 205 returns to the feedback page 2051.

In ACT218, the processor 201 determines whether the input made by the user is an instruction to transmit feedback data, that is, whether the "Send feedback" button on the feedback page 2051 has been operated. When the input is not a transmission instruction, that is, when the input is made to operate the "Back to app page" button for giving an instruction to return to the screen of the application program for connecting to the cloud printing service which is the original display, the processor 201 determines NO in ACT 218 and proceeds to ACT226. When the input is a transmission instruction, the processor 201 determines YES in ACT218 and proceeds to ACT219.

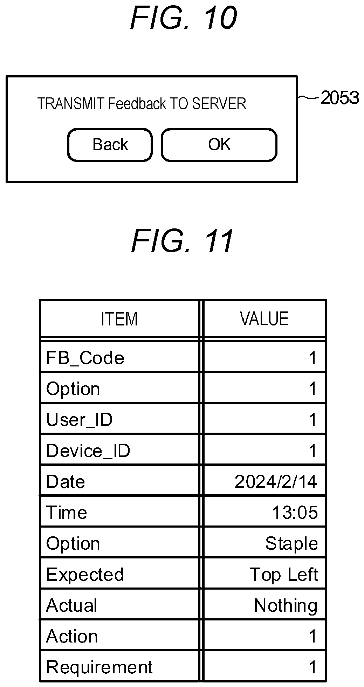

In ACT219, the processor 201 displays a confirmation pop-up on the operation panel 205 so that the confirmation pop-up is superimposed and displayed on the feedback page 2051. FIG. 10 is a diagram showing an example of display of a confirmation pop-up 2053. This confirmation pop-up 2053 is a pop-up for confirming with the user that the feedback data is to be transmitted to the server device 100. The confirmation pop-up 2053 includes, for example, two buttons, that is, a "Back" button and an "OK" button. The "Back" button is a button for giving an instruction to close the confirmation pop-up 2053 and return to the screen of the feedback page 2051 without performing transmission. The "OK" button is a button for giving an instruction to transmit a feedback based on the value of each option, which is a selection result on the request input page 2052 temporarily stored in the temporary storage unit 2021.

In ACT220, the processor 201 determines whether there has been an input to, for example, the touch panel of the operation panel 205. When there has been no input, the processor 201 determines NO in ACT220 and repeats the process of ACT220. In this manner, the processor 201 waits for the user to perform some input. When there has been an input, the processor 201 determines YES in ACT220 and proceeds to the process of ACT221.

In ACT221, the processor 201 determines whether the input is an input for selecting the "OK" button on the confirmation pop-up 2053, that is, whether an OK instruction has been input. When the OK instruction has not been input, that is, the "Back" button has been selected, the processor 201 determines NO in ACT220 and proceeds to the process of ACT225. When the OK instruction has been input, the processor 201 determines YES in ACT221 and proceeds to the process of ACT222.

In ACT222, the processor 201 operates as the feedback data processing unit 2013 and creates request feedback data based on the value of each option that is a selection result on the request input page 2052 that is temporarily stored. The processor 201 temporarily stores the created request feedback data in the temporary storage unit 2021. In this manner, the request feedback data is an example of expected value information that indicates the user's expected value related to an installation option.

In ACT223, the processor 201 transmits the feedback data temporarily stored in the temporary storage unit 2021, in this case, the request feedback data to the server device 100 through the communication interface 204 via the network NW. A specific example of the request feedback data will be described later.

In ACT224, the processor 201 operates as the user feedback acquisition unit 2012 and determines whether there is any non-installation option that has not been answered by the user, based on information indicating the non-installation option stored in the temporary storage unit 2021. When there is no unanswered non-installation option, the processor 201 determines NO in ACT224 and ends this feedback processing. When there is any unanswered installation option, the processor 201 determines YES in ACT224 and proceeds to the process of ACT207. Thereby, the display of the operation panel 205 returns to the feedback page 2051. At this time, in ACT207, it is desirable to update the answered non-installation option so that the user can determine that it has been answered, as shown in FIG. 8.

In ACT225, the processor 201 ends the superimposed display of the confirmation pop-up on the feedback page 2051. Thereby, the display on the operation panel 205 returns to the feedback page 2051. Thereafter, the processor 201 proceeds to the process of ACT209.

In ACT226, the processor 201 operates as the feedback data processing unit 2013 and creates empty feedback data. The processor 201 temporarily stores the created empty feedback data in the temporary storage unit 2021. A specific example of the empty feedback data will be described later. Thereafter, the processor 201 proceeds to the process of ACT206. Thereby, the feedback data temporarily stored in the temporary storage unit 2021, that is, the empty feedback data in this case, is transmitted to the server device 100.

FIG. 11 is a schematic diagram showing an example of request feedback data. The request feedback data includes values for items, for example, "FB_Code", "Option", "User_ID", "Device_ID", "Date", "Time", "Option", "Expected", "Actual", "Action", and "Requirement". The meaning of each value can be commonly defined in the control program of the image forming apparatus 200 and the control program of the server device 100, or can be agreed upon in advance between the two control programs.

A value indicating whether the feedback data is request feedback data, success feedback data, or empty feedback data is set in the "FB_Code". For example, "1" is a value that indicates "request feedback data".

A value specifying a non-installation option is set in the "Option". For example, "1" is a value that indicates "Staple".

A user ID which is a value specifying a user is set in the "User_ID". For example, "1" is a value that indicates a user "A".

A device ID which is a value specifying an image forming apparatus 200 is set in the "Device_ID". For example, "1" is a value that indicates "West wing, 3rd floor, east side".

Values of the current date and time are set in the "Date" and the "Time".

A value indicating a printing option included in a printing job is set in the "Option". In addition, a value indicating a printing parameter of the printing option included in the printing job is set in the "Expected". The values that are set in the "Option" and the "Expected" are values that are acquired in ACT201 and temporarily stored in the temporary storage unit 2021.

A value indicating a result used in the actual printing for the printing option is set in the "Actual". This value is set based on the confirmation result in ACT203.

A value indicating a selection result for the future action selected by the user is set in the "Action". In addition, a value indicating requirement for installation of an installation option selected by the user is set in the "Requirement". These values are set based on the values that are confirmed in ACT 217 and temporarily stored in the temporary storage unit 2021. For example, "1" set in the "Action" is a value indicating "search for other device", and "1" set in the "Requirement" is a value indicating "must have".

In the success feedback data, a value indicating "success" is set for the "Actual" with respect to the request feedback data shown in FIG. 11, and the "Action" and the "Requirement" are empty.

In addition, the empty feedback data is feedback data in which the "Action" and the "Requirement" are empty with respect to the request feedback data shown in FIG. 11.

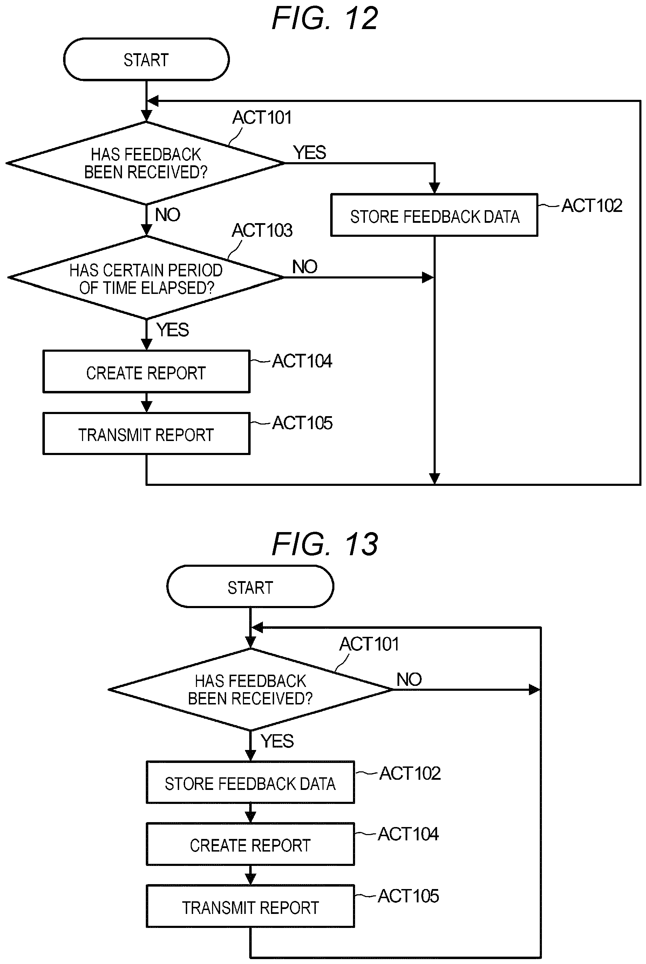

FIG. 12 shows a series of flowcharts showing an example of feedback processing in the server device 100, which is related to the creation of report information on non-installation options to be notified to the administrator. When the processor 101 of the server device 100 is started up, the processor 101 can start the feedback processing by executing the control program stored in the control program storage unit 1034.

In ACT101, the processor 101 operates as the feedback data reception unit 1011 and determines whether feedback data transmitted from any of the image forming apparatuses 200 has been received through the communication interface 104. When no feedback data has been received, the processor 101 determines NO in ACT101 and proceeds to the process of ACT103. When feedback data has been received, the processor 101 determines YES in ACT101 and proceeds to the process of ACT102.

In ACT102, the processor 101 stores the received feedback data in the feedback data storage unit 1035. Thereafter, the processor 101 proceeds to the process of ACT101.

In ACT103, the processor 101 operates as the report processing unit 1012 and determines whether a certain period of time, for example, one hour, has elapsed. When the certain period of time has not elapsed, the processor 101 determines NO in ACT103 and proceeds to the process of ACT101. When the certain period of time has elapsed, the processor 101 determines YES in ACT103 and proceeds to the process of ACT104.

In ACT104, the processor 101 creates report information to be notified to the administrator based on each of the pieces of feedback data received from the image forming apparatuses 200 within a certain period of time and stored in the feedback data storage unit 1035. The processor 101 temporarily stores the created pieces of report information in the temporary storage unit 1021.

In ACT105, the processor 101 transmits the pieces of report information temporarily stored in the temporary storage unit 1021 to the administrator terminal 300 through the communication interface 104. Thereafter, the processor 101 proceeds to the process of ACT101.

In this manner, the server device 100 transmits the report information based on the feedback data collected from the image forming apparatuses 200 to the administrator terminal 300 for each fixed time. Naturally, the server device 100 may transmit report information to the administrator terminal 300 each time feedback data is received from the image forming apparatus 200, rather than for each fixed time.

FIG. 13 is a flowchart showing an example of feedback processing in the server device 100 according to such a modification example. In this case, when the processor 101 determines in ACT101 that feedback data has not been received (ACT101: NO), the processor 101 repeats the process of ACT101. Then, when the processor 101 determines in ACT101 that feedback data has been received (ACT101: YES) and stores the feedback data in ACT102, the processor 101 proceeds to the process of ACT104.

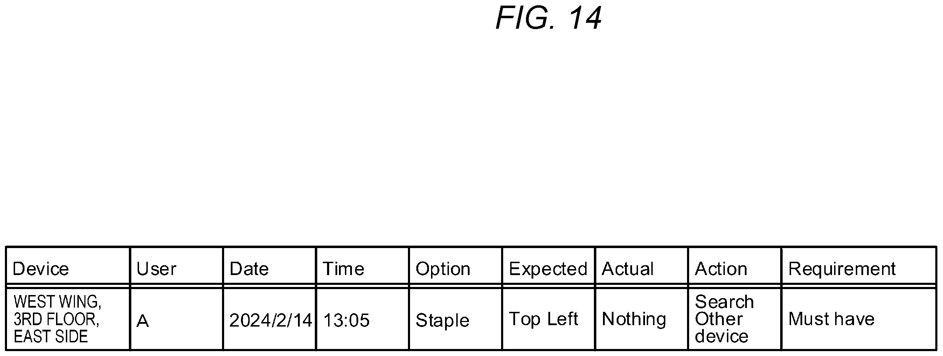

FIG. 14 is a schematic diagram showing an example of report information generated by the server device 100. As shown in FIG. 11, the feedback data is computer-readable because the value of the item is coded as "1", but the administrator cannot understand the contents indicated by the value in this state. The report information is obtained by converting the value into a form that the administrator can recognize. The administrator who views this report information on the administrator terminal 300 can grasp what installation option is desired for which image forming apparatus 200, and can consider which installation option is to be installed in the image forming apparatus 200.

As described above, the image forming system according to the first embodiment includes the server device 100 and the image forming apparatus 200. The server device 100 temporarily stores a printing job received from a user terminal, and the image forming apparatus 200 includes the communication interface 204 that communicates with the server device 100 via the network NW, the operation panel 205 that presents information to a user and receives an instruction from the user, and the processor 201 that receives a printing job from the server device 100 through the communication interface 204 in response to the user's instruction with respect to the operation panel 205 to perform image formation according to the printing job stored in the server device 100 and causes the printer 210 to perform image formation according to the printing job by using only functions that can be handled by its own machine when there is no installation option required to execute a printing option included in the printing job. The processor 201 of the image forming apparatus 200 also specifies the installation option required to execute the printing option included in the printing job after the image formation, collects request feedback data which is expected value information indicating the user's expected value related to the specified installation option using the operation panel 205, and transmits the collected request feedback data to the server device 100 through the communication interface 204. The server device 100 generates report information on the installation option based on the request feedback data, and notifies the administrator terminal 300 of the administrator of the generated report information.

In this manner, in the image forming system according to this embodiment, the user's expected value related to an installation option which is not installed in the image forming apparatus 200 can be collected from the user who performs image formation in the image forming apparatus 200 that does not have an installation option required to execute a printing option included in a printing job, and the administrator can be notified of the report information on the installation option. Thus, it is possible to give an opportunity to consider an installation option to be installed in the image forming apparatus 200 to the administrator of the image forming apparatus 200.

Here, a feedback request screen including inquiry items related to the specified installation option is generated, the generated feedback request screen is presented to the user through the operation panel 205, and request feedback data indicating the user's answers to the inquiry items, which is the user's expected value that is input through the operation panel 205, is acquired.

Thus, with the image forming system of this embodiment, the user's expected value related to an installation option that is not installed in the image forming apparatus 200 can be easily and reliably collected by inquiring of the user.

The inquiry items include requirement for installation of an installation option.

Thus, with the image forming system of this embodiment, it is possible to easily know to what extent the user desires the installation option to be installed.

The inquiry items also include future user actions with respect to image formation results using only functions that can be handled by its own machine.

Thus, with the image forming system of this embodiment, it is possible to easily know what actions a user who has obtained only an image formation result in an undesired form will take.

Furthermore, the processor 101 of the server device 100 generates report information based on request feedback data each time a certain period of time has elapsed, and notifies the administrator of the report information.

Thus, with the image formation system of this embodiment, it is possible to notify the administrator of report information on one or more pieces of request feedback data received within a certain period of time, and thus the administrator can collectively view the one or more pieces of report information and consider whether it is necessary to install an installation option that is not installed in the image forming apparatus 200.

Alternatively, each time the processor 101 of the server device 100 receives the request feedback data, the processor 101 generates report information based on the request feedback data and notifies the administrator of the report information.

Thus, with the image forming system of this embodiment, the administrator can rapidly consider whether it is necessary to install an installation option that is not installed in the image forming apparatus 200.

### [Second embodiment]

In the image forming system according to the first embodiment, the image forming apparatus 200 creates feedback data, and the server device 100 creates report information based on this feedback data and notifies the administrator of the report information. However, the creation and notification of the report information may be performed by the image forming apparatus 200. This will be described below as a second embodiment. The same configurations and operations as those in the first embodiment are denoted by the same reference numerals as those in the first embodiment, and the description thereof will be omitted.

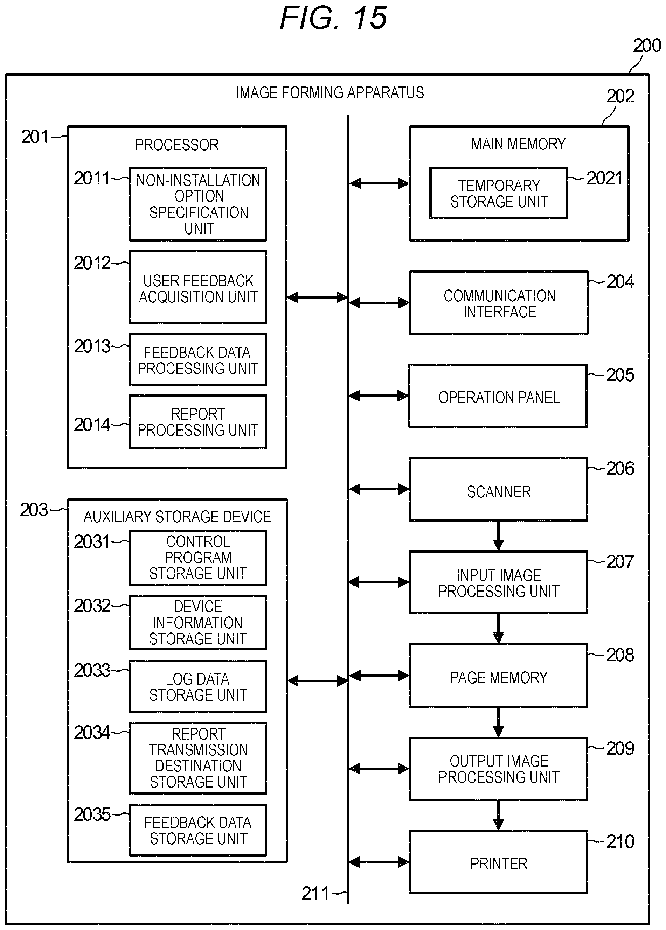

FIG. 15 is a block diagram showing an example of a circuit configuration of an image forming apparatus 200 according to the second embodiment. The image forming apparatus 200 according to the second embodiment further includes a report transmission destination storage unit 2034 and a feedback data storage unit 2035 in the auxiliary storage device 203, and a report processing unit 2014 (e.g., a report processor, etc.) installed in a processor 201.

The report transmission destination storage unit 2034 stores a network address, such as an IP address of an administrator terminal 300, which is a transmission destination of report information and is an address of an administrator of the image forming apparatus 200.

The feedback data storage unit 2035 stores feedback data created by the feedback data processing unit 2013. In the second embodiment, the feedback data is stored in the feedback data storage unit 2035 instead of a temporary storage unit 2021. Thereby, feedback data that has not been transmitted as report information is stored even when the image forming apparatus 200 needs to be turned off once and then restarted for some reason.

The report processing unit 2014 is installed in the processor 201 by executing a control program stored in a control program storage unit 2031. The report processing unit 2014 creates report information based on the feedback data stored in the feedback data storage unit 2035. The report processing unit 2014 then transmits the created report information to the network address of the administrator terminal 300 stored in the report transmission destination storage unit 2034 through a communication interface 204.

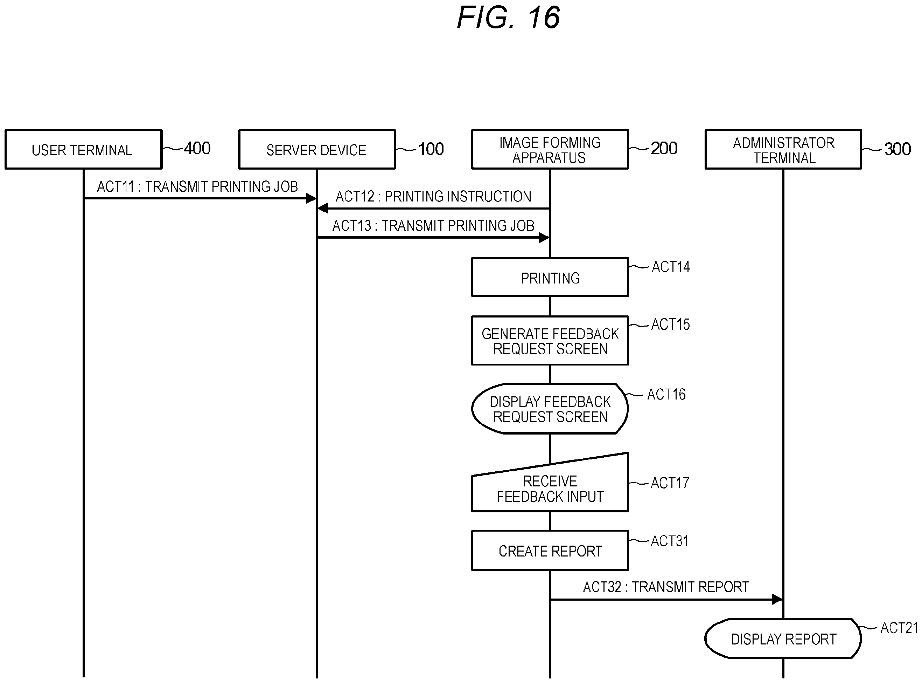

FIG. 16 is a sequence diagram showing operations of an image forming system according to the second embodiment. In this embodiment, the image forming apparatus 200 receives an input of a feedback in step S17 and then does not transmit feedback data based on the received feedback to the server device 100 as in the first embodiment. Instead, the image forming apparatus 200 creates report information based on the feedback data (step S31). Then, the image forming apparatus 200 transmits the created report information to the administrator terminal 300 via a network NW (step S32).

Hereinafter, operations of the image forming apparatus 200 related to the creation of report information on non-installation options to be notified to the administrator will be described. In this embodiment, the server device 100 does not perform any operation related to the creation of report information.

In feedback processing in the image forming apparatus 200 according to this embodiment, created feedback data is stored in the feedback data storage unit 2035 in the processes of ACT205, ACT222, and ACT226 among the series of processes shown in FIG. 5 to FIG. 7. Then, the feedback data transmission processing in ACT206 and ACT223 is not performed.

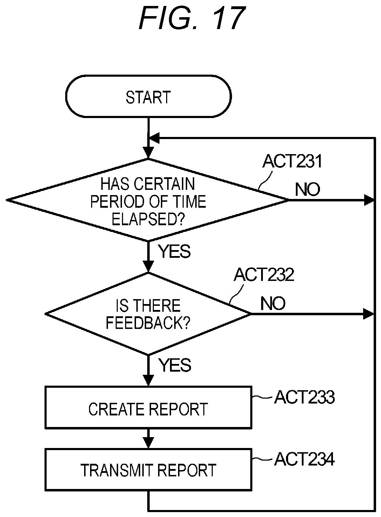

Instead, in this embodiment, when the image forming apparatus 200 is powered on and started up, the processor 201 of the image forming apparatus 200 starts a control program stored in the control program storage unit 2031 together with an application program for connecting to a cloud printing service that realizes a printing processing unit, thereby executing report processing in parallel with the application program. FIG. 17 is a flowchart showing an example of this report processing.

In ACT231, the processor 201 operates as the report processing unit 2014 to determine whether a certain period of time, such as one hour, has elapsed. When the certain period of time has not elapsed, the processor 201 determines NO in ACT231 and repeats the process of ACT231. When the certain period of time has elapsed, the processor 201 determines YES in ACT231 and proceeds to the process of ACT232.

In ACT232, the processor 201 determines whether there is feedback data with which report information is to be created. Specifically, the processor 201 confirms whether feedback data is stored in the feedback data storage unit 2035. When there is no feedback data, the processor 201 determines "NO" in ACT232 and proceeds to the process of ACT231. When there is feedback data, the processor 201 determines "YES" in ACT232 and proceeds to the process of ACT233.

In ACT233, the processor 201 creates report information to be notified to the administrator based on each piece of feedback data created within a certain period of time and stored in the feedback data storage unit 2035. The processor 201 temporarily stores the created each piece of report information in the temporary storage unit 2021.

In ACT234, the processor 201 transmits each piece of report information temporarily stored in the temporary storage unit 2021 to the network address of the administrator terminal 300 stored in the report transmission destination storage unit 2034 through the communication interface 204. Thereafter, the processor 201 proceeds to the process of ACT231.

In this manner, the image forming apparatus 200 transmits the report information based on the feedback data to the administrator terminal 300 for each fixed time.

Naturally, also in this embodiment, as in the first embodiment, the image forming apparatus 200 may transmit the report information to the administrator terminal 300 each time feedback data is created, rather than for each fixed time. In that case, in the processes of ACT205, ACT222, and ACT226, created feedback data is stored in the temporary storage unit 2021, as in the first embodiment. Then, instead of the feedback data transmission processing in ACT206 and ACT223, report information creation processing in ACT233 and report information transmission processing in ACT234 are executed.

As described above, in the image forming system according to the second embodiment, the processor 201 of the image forming apparatus 200 generates report information based on collected request feedback data, and notifies the administrator terminal 300 of the generated report information through the communication interface 204.

Thus, also in the image forming system according to the second embodiment, as in the image forming system according to the first embodiment, it is possible to give an opportunity to consider an installation option to be installed in the image forming apparatus 200 to the administrator of the image forming apparatus 200. In addition, it is possible to generate report information and notify the administrator of the report information without using the server device 100.

The processor 201 of the image forming apparatus 200 generates report information based on request feedback data each time a certain period of time elapses, and notifies the administrator of the generated report information.

Thus, with the image forming system of this embodiment, since it is possible to notify the administrator of report information on one or more pieces of request feedback data received within a certain period of time, the administrator can collectively view the one or more pieces of report information and consider whether it is necessary to install an installation option that is not installed in the image forming apparatus 200.

Alternatively, each time the processor 201 of the image forming apparatus 200 collects request feedback data, the processor 201 generates report information based on the request feedback data and notifies the administrator of the generated report information.

Thus, with the image forming system of this embodiment, the administrator can rapidly consider whether it is necessary to install an installation option that is not installed in the image forming apparatus 200.

### [Third embodiment]

In the image forming system according to the first embodiment, the image forming apparatus 200 creates feedback data, and the server device 100 creates report information based on the feedback data and notifies the administrator of the created report information. However, the feedback data may also be created by the server device 100. This will be described below as a third embodiment. The same configurations and operations as those in the first embodiment are denoted by the same reference numerals as those in the first embodiment, and the description thereof will be omitted.

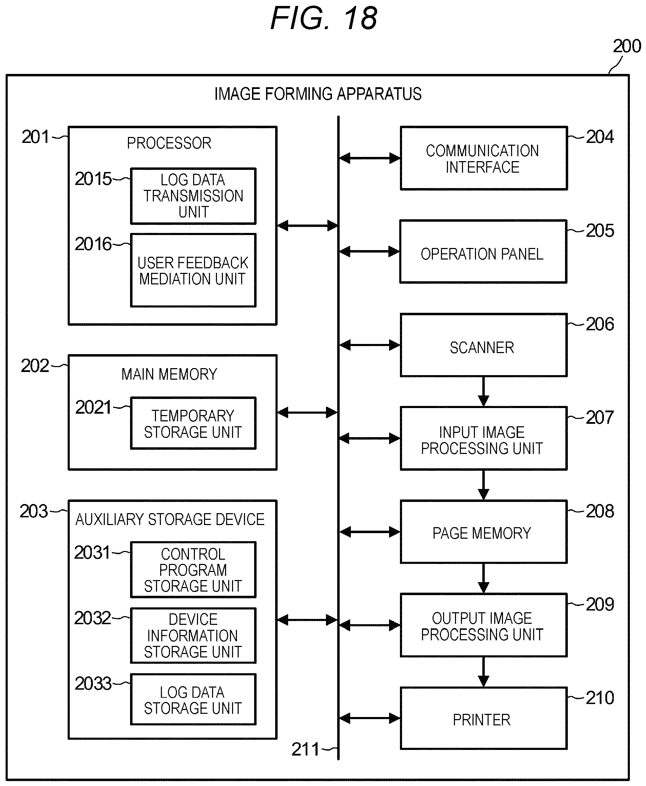

FIG. 18 is a block diagram showing an example of a circuit configuration of an image forming apparatus 200 according to the third embodiment. The image forming apparatus 200 according to the third embodiment includes a log data transmission unit 2015 and a user feedback mediation unit 2016 instead of the non-installation option specification unit 2011, the user feedback acquisition unit 2012, and the feedback data processing unit 2013 installed in the processor 201 in the first embodiment.

The log data transmission unit 2015 transmits log information stored in a log data storage unit 2033 to a server device 100 through a communication interface 204.

The user feedback mediation unit 2016 displays a feedback request screen transmitted from the server device 100 through the communication interface 204 on an operation panel 205. The user feedback mediation unit 2016 also transmits a user's input result using the operation panel 205 on the feedback request screen to the server device 100 through the communication interface 204.

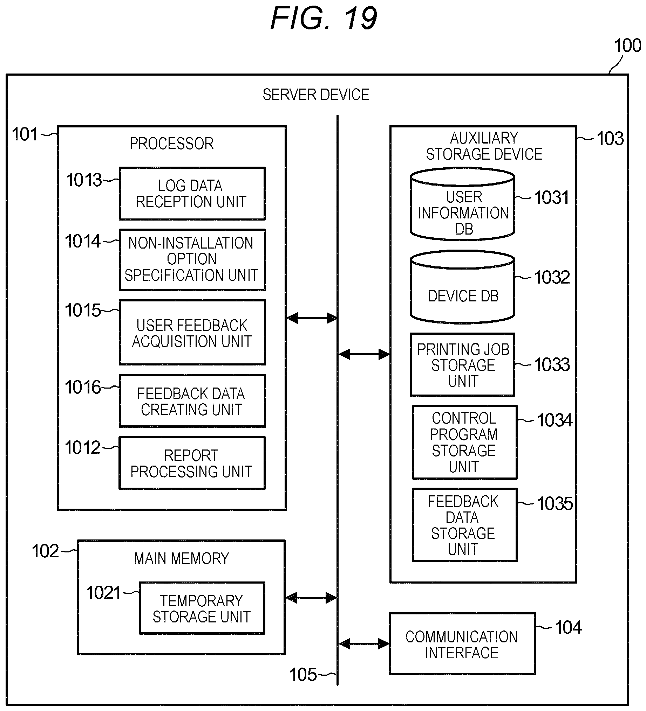

FIG. 19 is a block diagram showing an example of a circuit configuration of the server device 100 according to the third embodiment. The server device 100 according to the third embodiment includes a log data reception unit 1013, a non-installation option specification unit 1014, a user feedback acquisition unit 1015, and a feedback data creating unit 1016, instead of the feedback data reception unit 1011 installed in the processor 101 in the first embodiment.

The log data reception unit 1013, which is installed in the processor 101 by executing the control program, receives log information transmitted from the image forming apparatus 200 through the communication interface 104. The log data reception unit 1013 temporarily stores the received log information in the temporary storage unit 1021.

Similarly, the non-installation option specification unit 1014, which is installed in the processor 101 by executing the control program, corresponds to the non-installation option specification unit 2011 of the image forming apparatus 200 in the first embodiment. The non-installation option specification unit 1014 specifies a non-installation option of the image forming apparatus 200 by the method described for the non-installation option specification unit 2011. That is, the non-installation option specification unit 1014 specifies an installation option that is not installed in the image forming apparatus 200 that is the source of transmission, based on log information temporarily stored in the temporary storage unit 1021 and a printing job transmitted to the image forming apparatus 200 which is the source of transmission of the log information, or log information temporarily stored in the temporary storage unit 1021 and device information stored in a device database 1032 for the image forming apparatus 200.

Similarly, the user feedback acquisition unit 1015 installed in the processor 101 by executing the control program corresponds to the user feedback acquisition unit 2012 of the image forming apparatus 200 in the first embodiment. The user feedback acquisition unit 1015 acquires a user feedback related to a non-installation option specified by the non-installation option specification unit 1014 by inquiring the non-installation option from a user using the operation panel 205 of the image forming apparatus 200. Specifically, the user feedback acquisition unit 1015 creates screen information on a feedback page or a request input page, which is the feedback request screen described in the first embodiment, and a confirmation pop-up based on the non-installation option specified by the non-installation option specification unit 1014 and transmits the screen information to the image forming apparatus 200 through the communication interface 104. The user feedback mediation unit 2016 of the image forming apparatus 200 receives a display based on the received screen information and the user's input result, that is, a user feedback, by using the operation panel 205 and transmits input information indicating the input result to the server device 100. The user feedback acquisition unit 1015 acquires the input information returned from the image forming apparatus 200 through the communication interface 104, and creates contents to be transmitted to the image forming apparatus 200 next based on the input information.

The feedback data creating unit 1016, which is also installed in the processor 101 by executing the control program, corresponds to the feedback data processing unit 2013 of the image forming apparatus 200 in the first embodiment. The feedback data creating unit 1016 creates feedback data based on user feedback, which is a reply from the image forming apparatus 200 received through the communication interface 104, by the method described in the first embodiment. Then, the feedback data creating unit 1016 stores the created feedback data in the feedback data storage unit 1035.

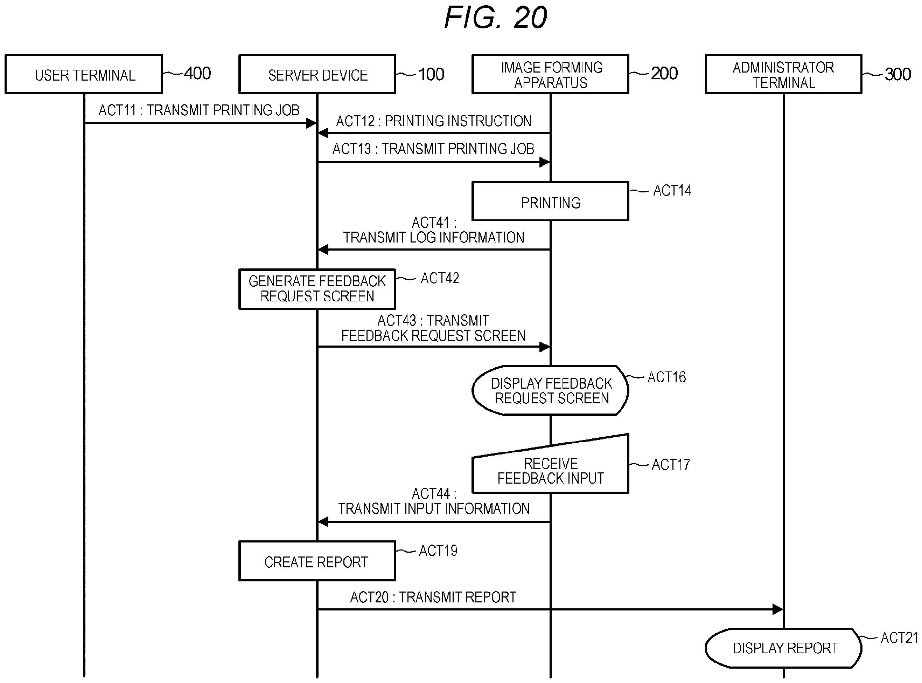

FIG. 20 is a sequence diagram showing operations of the image forming system according to the third embodiment. In this embodiment, the image forming apparatus 200 executes printing based on a printing job in step S14, and then transmits log information to the server device 100 via a network NW (step S41).

The server device 100 having received the log information generates a feedback request screen for receiving a feedback from the user (step S42). The server device 100 then transmits the generated feedback request screen to the image forming apparatus 200 which is the source of transmission of the log information via the network NW (step S43).

The image forming apparatus 200 having received the feedback request screen displays the feedback request screen on the operation panel 205 (step S16). The image forming apparatus 200 then receives a feedback input by the user operating the operation panel 205 (step S17) and transmits input information indicating the contents of the received feedback to the server device 100 via the network NW (step S44).

The server device 100 having received the input information transmitted from the image forming apparatus 200 creates feedback data based on the input information, and creates report information based on the created feedback data (step S19).

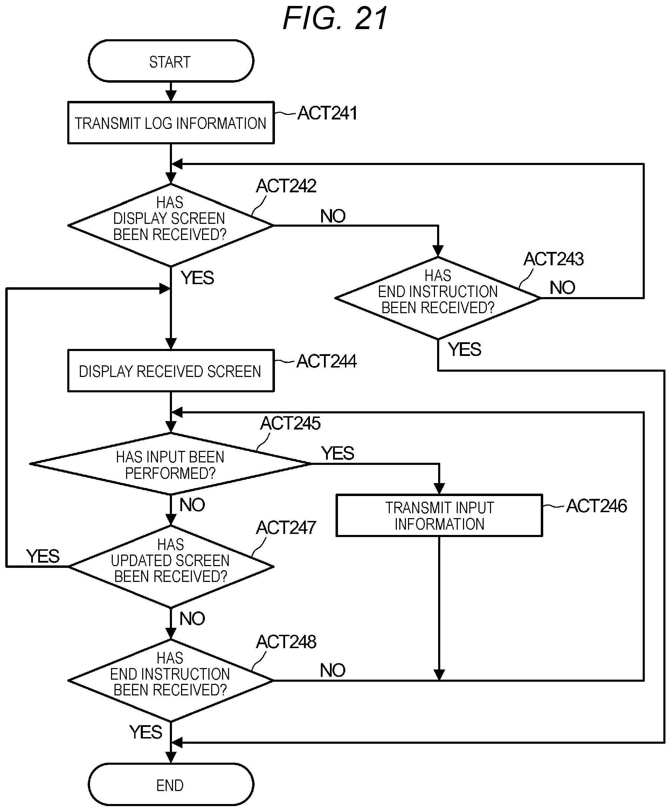

FIG. 21 is a flowchart showing an example of feedback processing after image formation in the image forming apparatus 200 according to the third embodiment.

In ACT241, the processor 201 of the image forming apparatus 200 operates as a log data transmission unit 2015 to transmit log information indicating an image formation result, that is, a printing result, to the server device 100 through the communication interface 204 via the network NW.

In ACT242, the processor 201 operates as a user feedback mediation unit 2016 to determine whether screen information on a display screen transmitted from the server device 100 through the communication interface 204 via the network NW has been received. When the screen information on the display screen has been received, the processor 201 determines YES in ACT242 and proceeds to the process of ACT244. When the screen information on the display screen has not been received, the processor 201 determines NO in ACT242 and proceeds to the process of ACT243.

In ACT243, the processor 201 determines whether an end instruction transmitted from the server device 100 through the communication interface 204 via the network NW has been received. When the end instruction has not been received, the processor 201 determines NO in ACT243 and proceeds to the process of ACT242. When the end instruction has been received, the processor 201 determines YES in ACT243 and ends this feedback processing.

In ACT244, the processor 201 displays a display screen based on the received screen information on the display screen on the operation panel 205.

In ACT245, the processor 201 determines whether there has been an input to the operation panel 205. When there has been no input, the processor 201 determines NO in ACT245 and proceeds to the process of ACT247. When there has been an input, the processor 201 determines YES in ACT245 and proceeds to the process of ACT246.

In ACT246, the processor 201 transmits input information indicating input contents to the server device 100 through the communication interface 204 via the network NW. Thereafter, the processor 201 proceeds to the process of ACT245.

In ACT247, the processor 201 determines whether screen information on the updated display screen transmitted from the server device 100 through the communication interface 204 via the network NW has been received. When the screen information on the updated display screen has been received, the processor 201 determines YES in ACT247 and proceeds to the process of ACT244. When the screen information on the updated display screen has not been received, the processor 201 determines NO in ACT247 and proceeds to the process of ACT248.

In ACT248, the processor 201 determines whether the end instruction transmitted from the server device 100 through the communication interface 204 via the network NW has been received. When the end instruction has not been received, the processor 201 determines NO in ACT248 and proceeds to the process of ACT245. When the end instruction has been received, the processor 201 determines YES in ACT248 and ends this feedback processing.

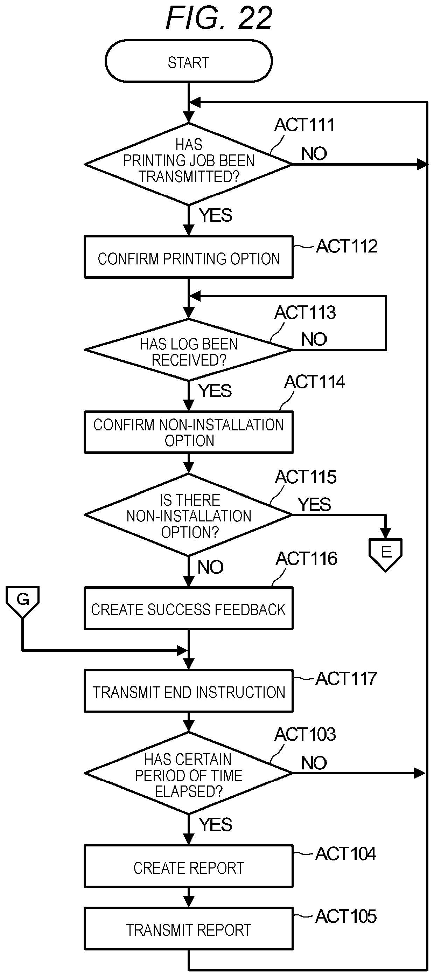

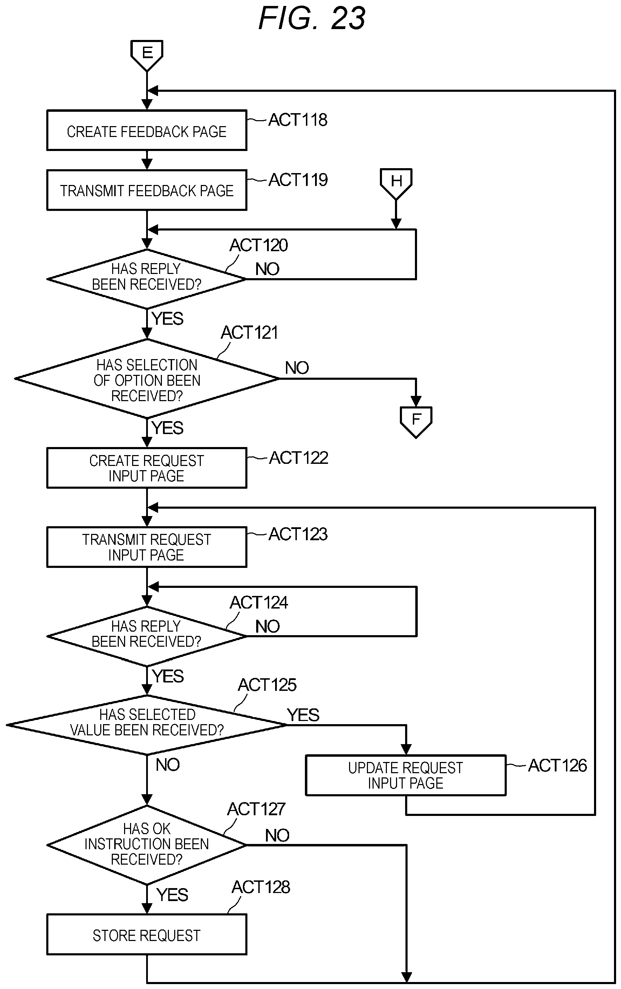

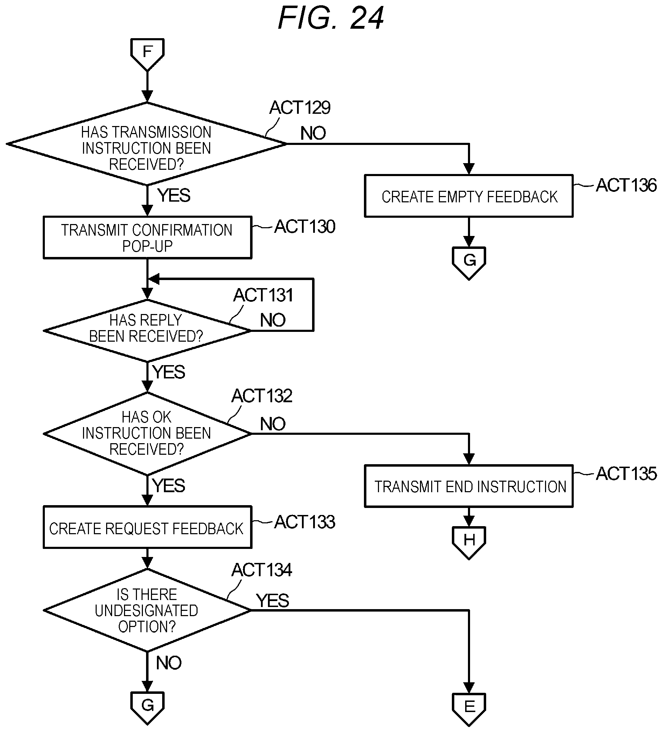

FIGS. 22 to 24 are diagrams showing a series of flowcharts showing an example of feedback processing in the server device 100 according to the third embodiment, which is related to the creation of report information on non-installation options to be notified to an administrator. The processor 101 of the server device 100 can execute this feedback processing by executing a control program stored in a control program storage unit 1034. This feedback processing can be executed in parallel with, for example, an operation as a normal printing server. In addition, the processor 101 can execute the feedback processing shown in this flowchart in parallel for each of the plurality of image forming apparatuses 200.

In ACT111, the processor 101 operates as the non-installation option specification unit 1014 to determine whether a printing job has been transmitted to the corresponding image forming apparatus 200. When no printing job has been transmitted, the processor 101 determines NO in ACT111 and repeats the process of ACT111. When a printing job has been transmitted, the processor 101 determines YES in ACT111 and proceeds to the process of ACT112.

In ACT112, the processor 101 confirms printing options included in the transmitted printing job. The processor 101 temporarily stores the confirmed printing options and printing parameters in the temporary storage unit 1021.

In ACT113, the processor 101 operates as a log data reception unit 1013 to determine whether log information from the image forming apparatus 200 having transmitted the printing job has been received through the communication interface 104. When no log information has been received, the processor 101 determines NO in ACT113 and repeats the process of ACT113. When log information has been received, the processor 101 determines YES in ACT113 and proceeds to the process of ACT114. At this time, the processor 101 temporarily stores the received log information in the temporary storage unit 1021.

In ACT114, the processor 101 operates as the non-installation option specification unit 1014 to confirm, that is, specify, a non-installation option. The processor 101 stores information indicating the specified non-installation option in the temporary storage unit 2021.

In ACT115, the processor 101 determines whether there is a non-installation option. When there is a non-installation option, the processor 101 determines YES in ACT115 and proceeds to the process of ACT121. When there is no non-installation option, the processor 101 determines NO in ACT115 and proceeds to the process of ACT116.

In ACT116, the processor 101 operates as the feedback data creating unit 1016 to create success feedback data. The processor 101 temporarily stores the created success feedback data in the temporary storage unit 2021.

In ACT117, the processor 101 transmits an end instruction to the image forming apparatus 200 through the communication interface 104 via the network NW. Thereafter, in this embodiment, the processing proceeds to the process of ACT103. In the image forming apparatus 200, assuming that the processor 201 of the image forming apparatus 200 receives the end instruction in ACT243, the processor 201 ends the feedback processing in the image forming apparatus 200.

In ACT103, the processor 101 operates as the report processing unit 1012 to determine whether a certain period of time has elapsed. When the certain period of time has not elapsed, the processor 101 determines NO in ACT103 and proceeds to the process of ACT111. When the certain period of time has elapsed, the processor 101 determines YES in ACT103 and proceeds to the process of ACT104.

In ACT104, the processor 101 creates report information to be notified to the administrator based on each of pieces of feedback data received from the image forming apparatuses 200 within a certain period of time and stored in the feedback data storage unit 1035. The processor 101 temporarily stores the created pieces of report information in the temporary storage unit 1021.

In ACT105, the processor 101 transmits the pieces of report information temporarily stored in the temporary storage unit 1021 to the administrator terminal 300 through the communication interface 104. Thereafter, the processor 101 proceeds to the process of ACT111.

In ACT118, the processor 101 operates as the user feedback acquisition unit 1015 to create screen information on a feedback page, which is one of feedback request screens, based on the information indicating the non-installation options temporarily stored in the temporary storage unit 1021.

In ACT119, the processor 101 transmits the created screen information on the feedback page to the image forming apparatus 200 through the communication interface 104. In the image forming apparatus 200, the processor 201 of the image forming apparatus 200 displays the feedback page on the operation panel 205 based on the screen information in ACT244.

In ACT120, the processor 101 determines whether a reply has been received from the image forming apparatus 200 through the communication interface 104. When no reply has been received, the processor 101 determines NO in ACT120 and repeats the process of ACT120. When the processor 201 of the image forming apparatus 200 transmits input information as a reply in ACT246, the communication interface 204 of the server device 100 receives the input information and transmits it to the processor 101. Thereby, the processor 101 determines that a reply has been received. Thus, the processor 101 determines YES in ACT120 and proceeds to the process of ACT121.

In ACT121, the processor 101 determines whether the reply is input information for selecting an installation option on the feedback page. When the reply is not input information for selecting an installation option, the processor 101 determines NO in ACT121 and proceeds to the process of ACT130. When the reply is input information for selecting an installation option, the processor 101 determines YES in ACT121 and proceeds to the process of ACT122.

In ACT122, the processor 101 creates screen information on a request input page, which is one of feedback request screens.

In ACT123, the processor 101 transmits the created screen information on the request input page to the image forming apparatus 200 through the communication interface 104. In the image forming apparatus 200, assuming that the processor 201 of the image forming apparatus 200 receives updated screen information in ACT247, the processor 201 displays the request input page on the operation panel 205 based on the screen information in ACT244.

In ACT124, the processor 101 determines whether a reply has been received from the image forming apparatus 200 through the communication interface 104. When no reply has been received, the processor 101 determines NO in ACT124 and repeats the process of ACT124. When the processor 201 of the image forming apparatus 200 transmits input information as a reply in ACT246, the processor 101 having received the input information through the communication interface 204 determines that the reply has been received, determines YES in ACT124, and proceeds to the process of ACT125.

In ACT125, the processor 101 determines whether the reply is input information for selecting a value in either an option regarding the user's future action on the request input page or an option regarding requirement for the installation of an installation option. When the reply is not input information for selecting the value, the processor 101 determines NO in ACT125 and proceeds to the process of ACT127. When the reply is input information for selecting the value, the processor 101 determines YES in ACT125 and proceeds to the process of ACT126.

In ACT126, the processor 101 updates the request input page in accordance with the selected value. That is, the processor 101 generates screen information on the updated request input page. Thereafter, the processor 101 proceeds to the process of ACT123.

In ACT127, the processor 201 determines whether the received reply is input information indicating that an "OK" button on the request input page has been selected, that is, that an OK instruction has been input. When the OK instruction has not been input, that is, when the received reply is input information indicating that a "Cancel" button has been selected, the processor 101 determines NO in ACT127 and proceeds to the process of ACT118. Thereby, the display on the operation panel 205 of the image forming apparatus 200 returns to the feedback page. On the other hand, when an OK instruction has been input, the processor 101 determines YES in ACT127 and proceeds to the process of ACT128.

In ACT128, the processor 101 stores a request. Specifically, the processor 101 confirms the value of each option on the request input page and temporarily stores the value in the temporary storage unit 1021. Thereafter, the processor 101 proceeds to the process of ACT118. Thereby, the display on the operation panel 205 of the image forming apparatus 200 returns to the feedback page.

In ACT129, the processor 101 confirms whether the reply is input information indicating an instruction to transmit feedback data on the feedback page, that is, whether the reply is input information indicating an operation of a "Send feedback" button on the feedback page. When the reply is not input information indicating an instruction to transmit feedback data, that is, when the reply is input information indicating selection of a "Back to app page" button for giving an instruction to return to a screen of an application program for connecting to a cloud printing service which is the original display, the processor 101 determines NO inACT129 and proceeds to ACT136. When the reply is input information indicating an instruction to transmit feedback data, the processor 101 determines YES in ACT129 and proceeds to ACT130.

In ACT130, the processor 101 transmits the screen information on the confirmation pop-up to the image forming apparatus 200 through the communication interface 104. In the image forming apparatus 200, assuming that the processor 201 of the image forming apparatus 200 receives the updated screen information in ACT247, the processor 201 displays the confirmation pop-up on the operation panel 205 based on the screen information in ACT244.

In ACT131, the processor 101 determines whether a reply has been received from the image forming apparatus 200 through the communication interface 104. When no reply has been received, the processor 101 determines NO in ACT131 and repeats the process of ACT131. When the processor 201 of the image forming apparatus 200 transmits input information as a reply in ACT246, the processor 101 having received the reply through the communication interface 204 determines that the reply has been received, determines YES in ACT131, and proceeds to the process of ACT132.

In ACT132, the processor 101 determines whether the reply is input information indicating that the "OK" button on the confirmation pop-up has been selected, that is, that an OK instruction has been input. When the reply is input information indicating that an OK instruction has not been input, that is, that a "Back" button has been selected, the processor 101 determines NO in ACT132 and proceeds to the process of ACT135. When an OK instruction has been input, the processor 101 determines YES in ACT132 and proceeds to the process of ACT133.

In ACT133, the processor 101 operates as the feedback data creating unit 1016 to create request feedback data based on the temporarily stored value of each option that is a selection result on the request input page. The processor 101 temporarily stores the created request feedback data in the temporary storage unit 1021.

In ACT134, the processor 101 determines whether there is a non-installation option for which the user has not yet answered, based on the information indicating the non-installation options stored in the temporary storage unit 2021. When there is no non-installation option for which the user has not yet answered, the processor 101 determines NO in ACT134 and proceeds to the process of ACT117. Thereby, the processor 101 transmits an end instruction to the image forming apparatus 200, and thus, in the image forming apparatus 200, the processor 201 of the image forming apparatus 200 ends the feedback processing in the image forming apparatus 200 assuming that the processor 201 has received the end instruction in ACT243. On the other hand, when there is any non-installation option for which the user has not yet answered, the processor 101 determines YES in ACT134 and proceeds to the process of ACT118. Thereby, the display on the operation panel 205 of the image forming apparatus 200 returns to the feedback page.

In ACT135, the processor 101 transmits the end instruction to the image forming apparatus 200 through the communication interface 104 via the network NW. Thereafter, in this embodiment, the processing proceeds to the process of ACT120. In the image forming apparatus 200, assuming that the processor 201 of the image forming apparatus 200 has received the end instruction in ACT243, the processor 201 ends the superimposed display of the confirmation pop-up.

In ACT136, the processor 101 operates as the feedback data creating unit 1016 (e.g., feedback data creator, etc.) to create empty feedback data. The processor 101 temporarily stores the created empty feedback data in the temporary storage unit 1021. Thereafter, the processor 101 proceeds to the process of ACT117. Thereby, the processor 101 transmits the end instruction to the image forming apparatus 200, and thus, in the image forming apparatus 200, the processor 201 of the image forming apparatus 200 ends the feedback processing in the image forming apparatus 200 assuming that the processor 201 has received the end instruction in ACT243.

In this embodiment, as in the first embodiment, report information may be created and transmitted to the administrator terminal 300 each time feedback data is created, rather than for each fixed time. In this case, the process of ACT103 may be omitted.

As described above, in the image forming system according to the third embodiment, the processor 201 of the image forming apparatus 200 transmits log information related to image formation to the server device 100 through the communication interface 204 after image formation, and the processor 101 of the server device 100 specifies an installation options required to execute a printing option included in a printing job that is the source of image formation in the image forming apparatus 200 based on the log information transmitted from the image forming apparatus 200 and received through the communication interface 104, generates information of a feedback request screen based on the specified installation option, and transmits the generated information on the feedback request screen to the image forming apparatus 200 that is the source of transmission of the log information through the communication interface 104. The processor 201 of the image forming apparatus 200 presents the information on the feedback request screen transmitted from the server device 100 and received through the communication interface 204 to the user via the operation panel 205, acquires input information indicating the user's answer that is the source of request feedback data via the operation panel 205, and transmits the acquired input information to the server device 100 through the communication interface 204. Then, the processor 101 of the server device 100 generates request feedback data based on the input information transmitted from the image forming apparatus 200 and received through the communication interface 204, generates report information based on the generated request feedback data, and notifies the administrator terminal 300 of the generated report information through the communication interface 204.

In this manner, in the image forming system according to the third embodiment, as in the image forming system according to the first embodiment, it is possible to give an opportunity to consider an installation option to be installed in the image forming apparatus 200 to the administrator of the image forming apparatus 200. Furthermore, the processor 201 of the image forming apparatus 200 only needs to perform input/output processing for presenting information from the server device 100 and acquiring the user's input result, thereby lightening the weight of the control program stored in the image forming apparatus 200.

Furthermore, the processor 101 of the server device 100 generates report information based on the generated request feedback data each time a certain period of time elapses, and notifies the administrator of the report information.

Thus, with the image forming system of this embodiment, since it is possible to notify the administrator of report information on one or more pieces of request feedback data generated within a certain period of time, the administrator can collectively view one or more pieces of report information and consider whether it is necessary to install an installation option that is not installed in the image forming apparatus 200.

Alternatively, each time the processor 101 of the server device 100 generates request feedback data, the processor 101 generates report information based on the request feedback data and notifies the administrator of the report information.

Thus, with the image forming system of this embodiment, the administrator can rapidly consider whether it is necessary to install an installation option that is not installed in the image forming apparatus 200.

The first and third embodiment have been described above, but the embodiments are not limited thereto.

For example, in the above embodiments, an example in which creation of report information and notification to an administrator are performed for each fixed time, but in the first and second embodiments, other timings such as when the image forming apparatus 200 is started up or when a specified time has elapsed since startup may be used. Further, in any of the embodiments, a condition other than a timing, such as the number of pieces of feedback data accumulated, may be used as a trigger.

In addition, report information may be created immediately, and the report information may be notified to an administrator with a predetermined condition as a trigger.

In addition the above-described flow of the information processing performed by the processor 101 or 201 described with reference to the flowchart is an example, and is not limited to this order. The order of processes may be changed or a plurality of processes may be performed in parallel, as long as there is no discrepancy with the preceding or subsequent processing.

Further, the server device 100 that performs feedback processing related to the creation of report information on a non-installation option to be notified to the administrator may be configured as a computer separate from a computer that functions as a printing server.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions as defined by the appended claims. The accompanying claims and their equivalents are intended to cover such forms or modifications as would fall within the scope of the inventions.

### [Appendix]

From the above-described specific embodiments, the disclosure having the following configuration can be extracted.
[1] An image forming system including:
   an image forming unit that performs image formation according to a printing job using only functions that are able to be handled by its own machine when an installation option required to execute a printing option included in the printing job is not provided; and
   a processor,
   wherein the processor
   specifies the installation option required to execute the printing option included in the printing job after the image formation performed by the image forming unit,
   collects expected value information indicating a user's expected value related to the specified installation option,
   generates report information on the installation option based on the collected user's expected value information, and
   notifies an administrator of the generated report information.
[2] The image forming system according to [1], wherein, when the processor collects the expected value information, the processor
   generates an inquiry screen including an inquiry item related to the installation option,
   presents the inquiry screen to the user, and
   acquires the user's answer to the inquiry item, which is the expected value information.
[3] The image forming system according to [2], wherein the inquiry item includes requirement for installation of the installation option.
[4] The image forming system according to [2], wherein the inquiry item includes a future user action with respect to an image formation result using only the functions that are able to be handled by its own machine.
[5] The image forming system according to any one of [2] to [4], wherein
   the image forming system includes
   an image forming apparatus that includes the image forming unit, a communication interface for communicating with an external device via a network, a user interface for presenting information to the user and receiving an instruction from the user, and a processor, and
   a server device that includes a communication interface for communicating with an external device via the network and a processor,
   the processor of the image forming apparatus
   specifies the installation option required to execute the printing option included in the printing job after image formation performed by the image forming unit,
   generates an inquiry screen including an inquiry item related to the installation option,
   displays the inquiry screen through the user interface,
   acquires the user's answer to the inquiry item, which is the expected value information, through the user interface, and
   transmits the acquired answer to the server device through the communication interface, and
   the processor of the server device
   generates the report information based on the answer transmitted from the image forming apparatus and received through the communication interface, and
   notifies the administrator of the generated report information through the communication interface.
[6] The image forming system according to any one of [2] to [4], wherein
   the image forming system includes an image forming apparatus including the image forming unit, a communication interface for communicating with an external device via a network, a user interface for presenting information to the user and receiving an instruction from the user, and a processor, and
   the processor of the image forming apparatus
   specifies the installation option required to execute the printing option included in the printing job after image formation performed by the image forming unit,
   generates an inquiry screen including an inquiry item related to the installation option,
   displays the inquiry screen through the user interface,
   acquires the user's answer to the inquiry item, which is the expected value information, through the user interface,
   generates the report information based on the acquired answer, and
   notifies the administrator of the generated report information through the communication interface.
[7] The image forming system according to any one of [2] to [4], wherein
   the image forming system includes
   an image forming apparatus that includes the image forming unit, a communication interface for communicating with an external device via a network, a user interface for presenting information to the user and receiving an instruction from the user, and a processor, and
   a server device that includes a communication interface for communicating with an external device via the network and a processor,
   the processor of the image forming apparatus transmits log information related to the image formation to the server device through the communication interface after the image formation performed by the image forming unit,
   the processor of the server device
   specifies the installation option required to execute the printing option included in the printing job, which is a source of the image formation in the image forming apparatus, based on the log information transmitted from the image forming apparatus and received through the communication interface,
   generates the inquiry screen based on the specified installation option, and
   transmits the generated inquiry screen to the image forming apparatus which is a source of transmission of the log information through the communication interface,
   the processor of the image forming apparatus further
   presents the inquiry screen transmitted from the server device and received through the communication interface to the user via the user interface,
   acquires the user's answer to the inquiry item via the user interface, and
   transmits the acquired user's answer to the server device through the communication interface, and
   the processor of the server device further
   generates the expected value information based on the generated inquiry screen and the answer transmitted from the image forming apparatus and received through the communication interface,
   generates the report information based on the generated expected value information, and
   notifies the administrator of the generated report information through the communication interface.
[8] The image forming system according to [1], wherein the processor generates the report information based on the collected expected value information each time a certain period of time elapses, and notifies the administrator of the report information.
[9] The image forming system according to [1], wherein the processor generates the report information based on the collected expected value information each time the expected value information is collected, and notifies the administrator of the report information.
[10] An image forming apparatus including:
   a communication interface that communicates with a server device that temporarily stores a printing job received from a user terminal via a network;
   a user interface that presents information to a user and receives an instruction from the user;
   an image forming unit that receives the printing job from the server device through the communication interface and performs image formation in response to the user's instruction to perform image formation according to the printing job stored in the server device with respect to the user interface, the image forming unit performing the image formation according to the printing job using only functions that are able to be handled by its own machine when an installation option required to execute a printing option included in the printing job is not provided; and
   a processor,
   wherein the processor
   specifies the installation option required to execute the printing option included in the printing job after the image formation performed by the image forming unit,
   collects expected value information indicating the user's expected value related to the specified installation option using the user interface, and
   outputs the collected user's expected value information.
[11] The image forming apparatus according to [10], wherein, when the processor collects the expected value information, the processor
   generates an inquiry screen including an inquiry item related to the installation option,
   presents the generated inquiry screen to the user through the user interface, and
   acquires the user's answer to the inquiry item, which is the expected value information, from the user interface.
[12] The image forming apparatus according to [11], wherein the inquiry item includes requirement for installation of the installation option in the image forming apparatus.
[13] The image forming apparatus according to [11], wherein the inquiry item includes a future user action with respect to an image formation result using only the functions that are able to be handled by its own machine.
[14] The image forming apparatus according to any one of [10] to [13], wherein, when the processor outputs the expected value information, the processor transmits the collected user's expected value information to the server device through the communication interface.
[15] The image forming apparatus according to any one of [10] to [13], wherein, when the processor outputs the expected value information, the processor
   generates report information on the installation option in the image forming apparatus based on the collected user's expected value information, and
   notifies an administrator of the image forming apparatus of the generated report information through the communication interface.
[16] The image forming apparatus according to [15], wherein the processor generates the report information based on the collected expected value information each time a certain period of time elapses, and notifies the administrator of the report information.
[17] The image forming apparatus according to [15], wherein the processor generates the report information based on the collected expected value information each time the processor collects the expected value information, and notifies the administrator of the report information.
[18] A server device including:
   a communication interface for communicating with an external device via a network;
   a storage that temporarily stores a printing job received from a user terminal; and
   a processor that transmits the printing job stored in the storage to the image forming apparatus that is a source of transmission of an image formation execution instruction through the communication interface in response to the image formation execution instruction received from one of a plurality of the image forming apparatuses through the communication interface,
   wherein the processor further
   receives, through the communication interface, log information related to the image formation that is transmitted after the image formation performed by the image forming apparatus,
   specifies an installation option required to execute a printing option based on the received log information, the installation option making the image forming apparatus perform the image formation in accordance with the printing job by using only functions that are able to be handled by its own machine because the image forming apparatus does not have the installation option required to execute the printing option included in the printing job that is a source of image formation,
   generates an inquiry screen including an inquiry item related to the installation option based on the specified installation option,
   transmits the generated inquiry screen to the image forming apparatus that is a source of transmission of the log information through the communication interface,
   acquires a user's answer to the inquiry item which is collected using the inquiry screen by the image forming apparatus and transmitted from the image forming apparatus through the communication interface,
   generates expected value information indicating the user's expected value related to the installation option based on the generated inquiry screen and the acquired answer,
   generates report information on the installation option in the image forming apparatus that is a source of transmission of the expected value information based on the generated expected value information, and
   notifies an administrator for the image forming apparatus of the generated report information through the communication interface.
[19] The server device according to [18], wherein the inquiry item includes requirement for installation of the installation option in the image forming apparatus.
[20] The server device according to [18] or [19], wherein the inquiry item includes a future user action with respect to an image formation result using only the functions that are able to be handled by its own machine.
[21] The server device according to [18], wherein the processor generates the report information based on the generated expected value information each time a certain period of time elapses, and notifies the administrator of the report information.
[22] The server device according to [18], wherein the processor generates the report information based on the expected value information each time the expected value information is generated, and notifies the administrator of the report information.
[23] An image forming method that is executed by a processor of an image forming apparatus that includes a communication interface that communicates with a server device that temporarily stores a printing job received from a user terminal via a network, a user interface that presents information to a user and receives an instruction from the user, an image forming unit that receives the printing job from the server device through the communication interface and performs image formation in response to the user's instruction to perform image formation according to the printing job stored in the server device with respect to the user interface, the image forming unit performing the image formation according to the printing job using only functions that are able to be handled by its own machine when an installation option required to execute a printing option included in the printing job is not provided, and the processor, the method comprising:
   specifying the installation option required to execute the printing option included in the printing job after image formation performed by the image forming unit;
   collecting expected value information indicating the user's expected value related to the specified installation option using the user interface; and
   outputting the collected user's expected value information.
[24] An image forming method that is executed by a processor of a server device that includes a communication interface for communicating with an external device via a network, a storage that temporarily stores a printing job received from a user terminal through the communication interface, and the processor, the method comprising:
   storing the received printing job in the storage in response to the printing job received through the communication interface and transmitted from the user terminal;
   transmitting a specific printing job among the printing jobs stored in the storage to an image forming apparatus that is a source of transmission of an image formation execution instruction through the communication interface in response to the image formation execution instruction for the specific printing job which is received from one of a plurality of the image forming apparatuses by using the communication interface;
   receiving log information related to the image formation that is transmitted after the image formation performed by the image forming apparatus by using the communication interface;
   specifying an installation option required to execute the printing option based on the received log information, the installation option making the image forming apparatus perform the image formation in accordance with the printing job by using only functions that are able to be handled by its own machine because the image forming apparatus does not have the installation option required to execute a printing option included in the printing job that is a source of image formation;
   generating an inquiry screen including an inquiry item related to the installation option based on the specified installation option;
   transmitting the generated inquiry screen to the image forming apparatus that is a source of transmission of the log information by using the communication interface;
   generating expected value information indicating a user's expected value related to the installation option in the image forming apparatus that is a source of transmission of the log information, based on the generated inquiry screen and the received user's answer in response to the received user's answer to the inquiry item which is collected using the inquiry screen by the image forming apparatus and transmitted from the image forming apparatus through the communication interface;
   generating report information on the installation option in the image forming apparatus that is a source of transmission of the log information based on the generated expected value information; and
   notifying an administrator for the image forming apparatus of the generated report information through the communication interface.

## Claims

1. An image forming system comprising:
an image forming unit configured to form an image according to a printing job based on installed functions, wherein the printing job includes printing options that require installation options to be installed in the image former to execute the printing job; and
a processor configured to:
specify the installation option required to execute the printing option included in the printing job after the image is formed by the image forming unit,
collect expected value information indicating a user's expected value related to the specified installation option,
generate report information on the installation option based on the collected user's expected value information, and
output notification of the generated report information.

2. The image forming system according to claim 1, wherein, when the processor collects the expected value information, the processor is configured to:
generate an inquiry screen including an inquiry item related to the installation option,
present the inquiry screen to the user, and
acquire an answer from the user to the inquiry item, the answer being the expected value information.

3. The image forming system according to claim 2, wherein the inquiry item includes a requirement for installation of the installation option.

4. The image forming system according to claim 2 or 3, wherein the inquiry item includes a future user action with respect to an image formation result using the installed functions of the image forming unit.

5. The image forming system according to any of claims 1 to 4, further comprising:
an image forming apparatus that comprises:
the image forming unit,
a communication interface for communicating with an external device via a network,
a user interface for presenting information to the user and receiving an instruction from the user, and
the processor, and
a server device that includes a communication interface for communicating with an external device via the network and a server device processor.

6. The image forming system according to claim 5, wherein the processor of the image forming apparatus:
displays the inquiry screen through the user interface,
receives the user's answer to the inquiry item through the user interface,
generates the report information based on the acquired answer, and
outputs notification of the generated report information through the communication interface.

7. The image forming system according to claim 5 or 6, wherein:
the processor of the image forming apparatus is configured to transmit log information related to the formed image to the server device through the communication interface after the image formation performed by the image forming unit, and
the processor of the server device is configured to:
specify the installation option required to execute the printing option included in the printing job, which is a source of the image formation in the image forming apparatus, based on the log information transmitted from the image forming apparatus and received through the communication interface,
generate the inquiry screen based on the specified installation option, and
transmit the generated inquiry screen to the image forming apparatus;
wherein preferably
the processor of the image forming apparatus is further configured to:
present the inquiry screen transmitted from the server device and received through the communication interface to the user via the user interface,
receive the user's answer to the inquiry item via the user interface, and
transmit the acquired user's answer to the server device through the communication interface, and
the processor of the server device is further configured to:
generate the expected value information based on the generated inquiry screen and the answer transmitted from the image forming apparatus and received through the communication interface,
generate the report information based on the generated expected value information, and
output notification of the generated report information through the communication interface.

8. The image forming system according to any of claims 1 to 7, wherein the processor generates the report information based on the collected expected value information each time a certain period of time elapses, and outputs notification of the report information.

9. The image forming system according to any of claims 1 to 8, wherein the processor generates the report information based on the collected expected value information each time the expected value information is collected.

10. An image forming apparatus comprising:
a communication interface configured to communicate with a server device that temporarily stores a printing job received from a user terminal via a network;
a user interface that presents information to a user and receives an instruction from the user;
an image forming unit configured to:
receive the printing job from the server device through the communication interface, and form an image in response to the user's instruction to form the image according to the printing job stored in the server device with respect to the user interface, wherein the image forming unit forms the image according to the printing job based on installed functions, wherein the printing job includes printing options that require installation options to be installed in the image forming unit to execute the printing job; and
a processor configured to:
specify the installation option required to execute the printing option included in the printing job after the image is formed by the image forming unit,
collect expected value information indicating the user's expected value related to the specified installation option using the user interface, and
output the collected user's expected value information.

11. The image forming apparatus according to claim 10, wherein, when the processor collects the expected value information, the processor is further configured to:
generate an inquiry screen including an inquiry item related to the installation option,
present the generated inquiry screen to the user through the user interface, and
acquire an answer from the user to the inquiry item, the answer being the expected value information, from the user interface:
wherein preferably the inquiry item includes requirement for installation of the installation option in the image forming apparatus, and wherein the inquiry item includes a future user action with respect to an image formation result using only the functions that are able to be handled by its own machine.

12. The image forming apparatus according to claim 10 or **11,** wherein, when the processor outputs the expected value information, the processor transmits the collected user's expected value information to the server device through the communication interface.

13. The image forming apparatus according to any of claims 10 to 12, wherein, when the processor outputs the expected value information, the processor is further configured to:
generate report information on the installation option in the image forming apparatus based on the collected user's expected value information, and
output a notification of the generated report information through the communication interface;
wherein preferably the processor is configured to:
generate the report information based on the collected expected value information each time a period of time elapses, and
provide a notification of the report information;
wherein further preferably the processor is configure to:
generate the report information based on the collected expected value information each time the processor collects the expected value information, and
provide a notification of the report information.

14. A method of forming an image that is executed by a processor of an image forming apparatus that includes a communication interface configured to communicate with a server device that temporarily stores a printing job received from a user terminal via a network, a user interface that presents information to a user and receives an instruction from the user, an image forming unit that receives the printing job from the server device through the communication interface and forms an image in response to the user's instruction to form the image according to the printing job stored in the server device with respect to the user interface, the image forming unit forms the image according to the printing job based on installed functions, wherein the printing job includes printing options that require installation options to be installed in the image forming unit to execute the printing job, the method comprising:
specifying the installation option required to execute the printing option included in the printing job after the image is formed by the image forming unit;
collecting expected value information indicating the user's expected value related to the specified installation option using the user interface; and
outputting the collected user's expected value information.

15. The method of forming an image according to claim 14, further comprising:
generating an inquiry screen including an inquiry item related to the installation option based on the specified installation option;
transmitting the generated inquiry screen to the image forming apparatus by the communication interface;
generating expected value information indicating a user's expected value related to the installation option in the image forming apparatus, based on the generated inquiry screen and a received user's answer to the inquiry item, the user's answer being collected via the image forming apparatus and transmitted from the image forming apparatus via the communication interface;
generating report information on the installation option in the image forming apparatus based on the generated expected value information; and
providing a notification of the generated report information through the communication interface;
wherein preferably the report information based on the collected expected value information is generated in response to a period of time elapsing.
